# EUROPEAN PATENT APPLICATION

(11) **EP 4 546 105 A1**
(43) Date of publication of application: **30.04.2025**
(21) Application number: 23845388.0
(22) Date of filing: 18.07.2023
(51) Int. Cl.: G06F 3/06

(54) **SYSTEM OPERATION METHOD AND TERMINAL APPARATUS**

(30) Priority: 28.07.2022 CN 202210898073
(71) Applicant: Huawei Technologies Co., Ltd., Shenzhen, Guangdong 518129 (CN)
(72) Inventor: REN, Wenjie, Shenzhen, Guangdong 518129 (CN); YIN, Yonghong, Shenzhen, Guangdong 518129 (CN); WANG, Chao, Shenzhen, Guangdong 518129 (CN); CHEN, Lei, Shenzhen, Guangdong 518129 (CN); JIN, Bo, Shenzhen, Guangdong 518129 (CN); LI, Yingwei, Shenzhen, Guangdong 518129 (CN)
(74) Representative: Goddar, Heinz J.
(86) International application number: PCT/CN2023/107987
(87) International publication number: WO 2024/022176

(57) **Abstract**

A system running method and a terminal apparatus are provided. The terminal apparatus includes N partitions, where N is a positive integer, and different partitions are storage areas used to store data of different functions in the terminal apparatus. The method includes: obtaining a first partition table, where the first partition table includes information about at least one of the N partitions, and the first partition table is updatable; reading, based on a latest first partition table, data stored in the at least one partition; and running an operating system of the electronic device based on the data. In this manner, system running flexibility and system upgrade convenience can be improved.

## Description

### CROSS-REFERENCE TO RELATED APPLICATIONS

This application claims priority to Chinese Patent Application No. 202210898073.1, filed with the China National Intellectual Property Administration on July 28, 2022 and entitled "SYSTEM RUNNING METHOD AND TERMINAL APPARATUS", which is incorporated herein by reference in its entirety.

### TECHNICAL FIELD

This application relates to the field of electronic technologies, and in particular, to a system running method and a terminal apparatus.

### BACKGROUND

A/B upgrade is an upgrade manner raised for seamless upgrade. Simply speaking, a terminal apparatus includes a side A and a side B, and the side A and the side B may correspond to different versions of a same operating system. For example, the side A corresponds to an earlier version of HarmonyOS^{®}, and the side B corresponds to a later version of HarmonyOS^{®}. Assuming that the terminal apparatus currently runs on the side A, when the terminal apparatus needs to be upgraded to the later version of HarmonyOS^{®}, the terminal apparatus is switched from the side A to the side B, so that upgrade can be implemented without affecting normal use of a user, this is, seamless upgrade is implemented.

Generally, the terminal apparatus stores a partition table of the side A and a partition table of the side B. The partition table of the side A stores information about a partition included in the side A, and the partition table of the side B stores information about a partition included in the side B. The partition of the side A and the partition of the side B do not overlap each other. The terminal apparatus runs on the side A based on the partition table of the side A, and runs on the side B based on the partition table of the side B. However, currently, the partition table of the side A and the partition table of the side B have been written into the terminal apparatus before delivery of the terminal apparatus, and are not editable or changeable. Therefore, flexibility is poor, and this is not conducive to subsequent software upgrade and optimization of the terminal apparatus.

### SUMMARY

An objective of this application is to provide a system running method and a terminal apparatus, so as to improve convenience and flexibility of system upgrade.

According to a first aspect, a system running method is provided, applied to a terminal apparatus. The terminal apparatus includes N partitions, where N is a positive integer, and different partitions are storage areas used to store data of different functions in the terminal apparatus. The method includes: obtaining a first partition table, where the first partition table includes information about at least one of the N partitions, and the first partition table is updatable; reading, based on a latest first partition table, data stored in the at least one partition; and running an operating system of the terminal apparatus based on the data.

Therefore, in this embodiment of this application, the terminal apparatus has an updatable partition table, and the partition table includes the information about at least one of the N partitions. For example, a partition table before update includes information about a partition 1 to a partition 3, and a partition table after the update includes information about a partition 4 to a partition 6. In other words, the partition table is not fixed and not updatable or editable, and has high flexibility, and this facilitates subsequent software upgrade and optimization of the terminal apparatus.

In a possible design, that the first partition table is updatable includes: partitions included in the first partition table before and after update are a combination of different partitions in the N partitions. In other words, the first partition table may change flexibly, and may be a flexible combination of different partitions in the N partitions. For example, the N partitions include a partition 1 to a partition 6, the first partition table before update includes information about the partition 1 to the partition 3, and the first partition table after the update includes information about the partition 4 to the partition 6. It should be noted that, as described in the background, in a current terminal apparatus, a partition table includes a side A and a side B. A partition table of the side A includes only information about a partition of the side A, and a partition table of the side B includes only information about a partition of the side B. Neither the partition table of the side A nor the partition table of the side B is updatable or editable. In other words, in the current terminal apparatus, the partition table is fixed. However, in embodiments of this application, the partition table is updatable, and may be a combination of different partitions in the N partitions. This is more flexible, and is more convenient for subsequent system optimization and upgrade of the terminal apparatus.

In a possible design, the terminal apparatus supports a first operating system and a second operating system. The terminal apparatus runs in the first operating system based on a first set of partitions in the N partitions, and the terminal apparatus runs in the second operating system based on a second set of partitions in the N partitions, where the first set of partitions and the second set of partitions do not overlap each other. In other words, the N partitions include the first set of partitions and the second set of partitions. When the first set of partitions is run, the terminal apparatus is located in the first operating system. When the second set of partitions is run, the terminal apparatus is located in the second operating system. For example, the first set of partitions is a partition of the side A, and the terminal apparatus is located on the side A when the first set of partitions is run. The second set of partitions is a partition of the side B, and the terminal apparatus is located on the side B when the second set of partitions is run. In other words, the N partitions may include both the partition of the side A and the partition of the side B, and the first partition table includes the information about at least one partition in the N partitions. In this case, the first partition table may include a combination of the partition of the side A and the partition of the side B, which is more flexible than a current partition table.

In a possible design, the first operating system and the second operating system correspond to different operating systems or different versions of a same operating system. For example, the first operating system and the second operating system are different versions of a same operating system. The first operating system is, for example, an earlier version of HarmonyOS^{®} (for example, HarmonyOS^{®} 1.0), and the second operating system is, for example, a later version of HarmonyOS^{®} (for example, HarmonyOS^{®} 2.0).

In a possible design, the first partition table includes information about at least one partition in the first set of partitions, and information about at least one partition in the second set of partitions. Therefore, an example in which the first set of partitions is a partition of the side A and the second set of partitions is a partition of the side B is still used. In other words, the N partitions include both the partition of the side A and the partition of the side B, and the first partition table includes the partition of the side A and the partition of the side B. It should be noted that, as described in the background, in a current terminal apparatus, a partition table of the side A includes only information about a partition of the side A, a partition table of the side B includes only information about a partition of the side B. Neither the partition table of the side A nor the partition table of the side B is updatable or editable. A case in which the partition of the side A and the partition of the side B are combined in a same partition table does not exist. However, in embodiments of this application, the first partition table may include the partition of the side A and the partition of the side B, to implement flexible combination of partitions in different operating systems. In this way, when the system of the terminal apparatus needs to be upgraded, upgrade efficiency can be improved. For example, it is assumed that an operating system of a later version (for example, the side B) upgrades a partition relative to an operating system of an earlier version (for example, the side A). In this case, based on a current upgrade manner, because the partition table of the side A and the partition table of the side B are independent of each other and are not updatable, even if only one partition in the partition table of the side B is upgraded in comparison with the partition table of the side A, the partition table of the side A needs to be completely switched to the partition table of the side B, that is, all partitions of the side B need to be reloaded. As a result, efficiency is low. However, in this application, because the first partition table is updatable and editable, and the first partition table may include the partition of the side A and the partition of the side B (an upgraded partition relative to the side A), when an operating system of an earlier version (for example, the side A) needs to be upgraded to an operating system of a later version (for example, the side B), only the first partition table needs to be loaded. Because the partition of the side A in the first partition table has been loaded and does not need to be reloaded, only the partition of the side B in the first partition table needs to be loaded, and all partitions of the side B do not need to be loaded, thus improving the upgrade efficiency.

In a possible design, the first partition table includes a data storage address of each partition, and the method further includes: downloading an upgrade package, where the upgrade package is used to upgrade a first partition in the N partitions; storing the upgrade package, and recording a storage address of the upgrade package; and updating a current storage address of the first partition in the first partition table based on the storage address. In other words, in embodiments of this application, because the first partition table is updatable, when the terminal apparatus upgrades the first partition, the current storage address of the first partition in the first partition table (which is an updatable table) may be updated to the storage address of the upgrade package (which is the upgrade package for upgrading the first partition). In this way, when the terminal apparatus runs based on an updated first partition table, the first partition is upgraded. This upgrade manner improves system upgrade convenience.

In a possible design, the upgrade package includes an installation package of a first application, and the method further includes: installing the first application based on the installation package, and setting a mark for the first application, where the mark is used to mark that the first application is an application installed during upgrade of the first partition, and the mark is used to delete the first application during rollback of the first partition by identifying the mark on the application. In other words, in embodiments of this application, when the terminal apparatus upgrades the first partition, if the application is downloaded, the terminal apparatus sets the mark for the application. The mark is used to delete, by identifying the mark, the application if the first partition needs to be rolled back (for example, the upgrade fails or a user actively triggers rollback), so as to quickly restore to an original state, that is, quickly complete rollback. In addition, during rollback, an application that needs to be deleted is deleted and an application is not incorrectly deleted, so that accuracy is high.

In a possible design, the method further includes: storing a rollback package of a first component in a free space corresponding to a second partition in the first partition table, where the first component is not a component of any partition in the N partitions, the second partition is a partition other than the first partition in the first partition table, and the rollback package of the first component is used to perform rollback of the first component after the terminal apparatus is upgraded.

In other words, in embodiments of this application, the terminal apparatus may store the rollback package of the first component (for example, a component that does not support A/B upgrade) in a free storage area of a partition (for example, the second partition) that does not need to be upgraded. When the first component needs to be rolled back, the rollback package is read from the free storage space for rollback. It should be noted that, currently, during system upgrade, a rollback package of the component that does not support A/B upgrade is deleted, and a rollback package is downloaded from a network during rollback, which wastes transmission resources. In embodiments of this application, the free storage space of the partition that is not upgraded is used, that is, rollback packages of these components are stored in the free storage area of the partition that is not upgraded. During rollback, the rollback packages are read from the free storage space for rollback, and the rollback packages do not need to be downloaded from the network, so that transmission resources are saved and efficiency is improved.

In a possible design, the first partition table includes a data storage address of each partition, and the method further includes: downloading an upgrade package, where the upgrade package is used to separately upgrade a third partition and a fourth partition in the N partitions, and a priority of the third partition is higher than that of the fourth partition; storing the upgrade package, and recording a storage address of the upgrade package; and updating a current storage address of the third partition in the first partition table based on the storage address.

For example, the N partitions include a system (system) partition 1 and a system partition 2. In a case, the system partition 1 is a version 1.0, the system partition 2 is a version 2.0, and the upgrade package includes a system partition of a version 3.0. In this case, the terminal apparatus may upgrade a partition with a higher priority in the system partition 1 and the system partition 2 based on the upgrade package.

In a possible design, that the priority of the third partition is higher than that of the fourth partition includes at least one of the following:
the third partition is in an unused state, and the fourth partition is in a used state; or
a version of the third partition is lower than a version of the fourth partition; or
a use frequency of the third partition is lower than a use frequency of the fourth partition.

The foregoing example is still used. The terminal apparatus may upgrade a partition with a higher priority in the system partition 1 and the system partition 2 based on the upgrade package. Therefore, before this, it needs to be determined which one of the system partition 1 and the system partition 2 has a higher priority. For example, if the system partition 1 is in an unused state, and the system partition 2 is in a used state, a priority of the system partition 1 is higher. In this way, the partition in the unused state may be preferentially upgraded, to avoid service interruption caused by upgrade of the partition that is being used. For another example, if a version of the system partition 1 is lower than a version of the system partition 2, a priority of the system partition 1 is higher than that of the system partition 2. In other words, a partition with a lower version is preferentially upgraded, to ensure that an earlier version is updated in a timely manner. For another example, if a use frequency of the system partition 1 is lower than that of the system partition 2, a priority of the system partition 1 is higher than that of the system partition 2. In other words, a partition with a lower use frequency is preferentially upgraded to improve usage.

In a possible design, the first partition table is stored by default before delivery of the terminal apparatus. It should be noted that currently, a partition table configured before delivery of the terminal apparatus is not updatable or editable. In embodiments of this application, the partition table configured before delivery of the terminal apparatus is updatable, and may include information about one or more partitions of the N partitions, which is more flexible.

In a possible design, the first partition table is stored in an application layer, a framework layer, or a kernel layer in the terminal apparatus. It should be noted that, currently, the partition table (including the partition table of the side A and the partition table of the side B) is stored at the kernel layer of the terminal apparatus and is not editable. In embodiments of this application, the first partition table may be stored at any layer of the application layer, the framework layer, the system layer, or the kernel layer, which is more flexible. For example, the first partition table is stored at the kernel layer. Generally, information at the kernel layer is invisible to an upper layer (the application layer, the system layer, the framework layer, or the like). Therefore, when the first partition table is stored at the kernel layer, confidentiality is good, and security is high. For example, the first partition table is stored on an upper side (for example, the application layer, the framework layer, or the system layer) of the kernel layer. Because the upper layer of the kernel layer has a high service association degree with the terminal apparatus (for example, the application layer includes various applications, and when an application runs a service, the application invokes a software module at the system layer through an API interface at the framework layer, to invoke underlying hardware to implement the service), the upper layer may update the first partition table based on a service requirement. In this way, flexibility of the first partition table is higher, and the updated first partition table is more suitable for a service requirement of the user.

In a possible design, the obtaining a first partition table includes: reading a second partition table, where the second partition table is a partition table stored by default before delivery of the terminal apparatus, the second partition table is not editable, and the second partition table includes a current storage address of data of a fifth partition; downloading an upgrade package, where the upgrade package is used to upgrade the fifth partition; recording a third partition table, where the third partition table includes a storage address of the upgrade package of the fifth partition; and forming the first partition table by combining the third partition table and the second partition table, where the first partition table is obtained by superimposing the storage address of the upgrade package in the third partition table on an upper layer of the current storage address of the fifth partition in the second partition table. In other words, the second partition table (that is, the partition table of the side A and/or the partition table of the side B in the background) is configured before delivery of the terminal apparatus. The terminal apparatus may combine the second partition table and the third partition table (which records the storage address of the upgrade package) to form the first partition table, and run the operating system based on the first partition table. Because the first partition table is updatable, it is convenient for the terminal apparatus to subsequently perform system upgrade or optimization.

In a possible design, superimposing the storage address of the upgrade package in the third partition table on the upper layer of the current storage address of the fifth partition in the second partition table includes: determining a file node corresponding to the fifth partition in the second partition table, where the file node can access the data stored at the current storage address of the fifth partition; and establishing an association relationship between the file node and the storage address of the upgrade package in the third partition table, so that the upgrade package can be accessed via the file node. In other words, the terminal apparatus may combine the second partition table and the third partition table to form the first partition table by establishing the association relationship between the file node corresponding to the fifth partition in the second partition table and the storage address of the upgrade package (which is the upgrade package used to upgrade the fifth partition) in the third partition table. Because the first partition table is updatable, it is convenient for the terminal apparatus to subsequently perform system upgrade or optimization.

In a possible design, the method further includes: determining that a second application in the terminal apparatus needs to access data stored in a sixth partition in the first partition table; determining whether the second application has access permission for the first partition table; and when it is determined that the first application has the access permission for the first partition table, allowing the second application to access, based on the first partition table, the data stored in the sixth partition. In other words, the first partition table is set with the access permission. An application having the access permission may access the data stored in the partition in the first partition table; otherwise, the application cannot access the data stored in the partition in the first partition table. In this way, data security can be improved, and leakage of the data in the partition can be avoided.

In a possible design, the N partitions include at least one of a system (system) partition, a custom (cust) partition, a version (Version) partition, a product (Product) partition, and a patch (Patch) partition. It should be noted that several examples of partitions are listed herein. Actually, there may be another partition. This is not limited in embodiments of this application.

According to a second aspect, a terminal apparatus is provided, including:
a processor, a memory, and one or more programs, where
the one or more programs are stored in the memory, the one or more programs include instructions, and when the instructions are executed by the processor, the terminal apparatus is enabled to perform the method according to the first aspect.

According to a third aspect, a terminal apparatus is provided, including:
an obtaining unit, configured to obtain a first partition table, where the first partition table includes information about at least one of N partitions in the terminal apparatus, the first partition table is updatable, different partitions of the N partitions are storage areas used to store data of different functions in the terminal apparatus, and N is a positive integer; and
a processing unit, configured to read, based on a latest first partition table, data stored in the at least one partition, and run an operating system of the terminal apparatus based on the data.

According to a fourth aspect, a computer-readable storage medium is further provided. The computer-readable storage medium is configured to store a computer program. When the computer program is run on a computer, the computer is enabled to perform the method according to the first aspect.

According to a fifth aspect, a computer program product is further provided, including a computer program. When the computer program is run on a computer, the computer is enabled to perform the method according to the first aspect.

According to a sixth aspect, an embodiment of this application further provides a chip. The chip is coupled to a memory in an electronic device, and is configured to invoke a computer program stored in the memory and perform the technical solutions according to the first aspect of embodiments of this application. In embodiments of this application, "coupling" means that two components are directly or indirectly combined with each other.

For beneficial effects of the second aspect to the sixth aspect, refer to beneficial effects of the first aspect. Details are not described again.

### BRIEF DESCRIPTION OF DRAWINGS

FIG. 1 is a diagram of a hardware structure of a terminal apparatus according to an embodiment of this application;
FIG. 2 is a diagram of a software structure of a terminal apparatus according to an embodiment of this application;
FIG. 3 is a diagram of a system partition of a terminal apparatus according to an embodiment of this application;
FIG. 4 is a diagram of an upgrade manner according to an embodiment of this application;
FIG. 5 is a schematic flowchart of an upgrade method according to an embodiment of this application;
FIG. 6 is a diagram of another upgrade manner according to an embodiment of this application;
FIG. 7 is a diagram of forming a partition table through combination according to an embodiment of this application;
FIG. 8 is a diagram of comparison before and after upgrade according to an embodiment of this application;
FIG. 9A and FIG. 9B each are a diagram of file nodes and partitions in a terminal apparatus according to an embodiment of this application;
FIG. 10 and FIG. 11 each are a diagram of file nodes according to an embodiment of this application;
FIG. 12 is a diagram of a rollback procedure according to an embodiment of this application;
FIG. 13 is a diagram of a head unit system according to an embodiment of this application;
FIG. 14 is a diagram of a software structure of a head unit according to an embodiment of this application;
FIG. 15 and FIG. 16 are diagrams of storing a rollback packet in a partition according to an embodiment of this application; and
FIG. 17 is a diagram of another structure of a terminal apparatus according to an embodiment of this application.

### DESCRIPTION OF EMBODIMENTS

The following describes some terms in embodiments of this application, to facilitate understanding of a person skilled in the art.

In embodiments of this application, "at least one" means one or more, and "a plurality of" means two or more. In addition, it should be understood that in descriptions of this specification, words such as "first" and "second" are merely intended for purposes of description, and should not be understood as expressing or implying relative importance or a sequence. For example, a first device and a second device do not represent an importance degree of the first device and the second device or represent a sequence of the first device and the second device, and are merely used for distinguishing and description. The term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects.

Reference to "an embodiment", "some embodiments", or the like described in the specification indicates that one or more embodiments of the specification include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized.

A system running method provided in embodiments of this application is applicable to a terminal apparatus. The terminal apparatus includes a system, where the system may be any operating system, for example, Android^{®}, HarmonyOS^{®}, Linux^{®}, and iOS^{®}. For example, the terminal apparatus may be a portable terminal apparatus like a mobile phone, a tablet computer, or a notebook computer. Alternatively, the terminal apparatus may be a wearable device like a watch or a band. Alternatively, the terminal apparatus may be a smart home device like a television set or a refrigerator. Alternatively, the terminal apparatus may be a vehicle, for example, various types of vehicles. Alternatively, the terminal apparatus may be an in-vehicle device, for example, a head unit, an intelligent cockpit, or each system in the intelligent cockpit, for example, an in-vehicle infotainment IVI (In-Vehicle Infotainment) system or another in-vehicle apparatus, for example, a vehicle domain controller (Vehicle Domain Controller, VDC), an intelligent cockpit domain controller (Cockpit Domain Controller, CDC), an intelligent driving domain controller (ADAS/AD Domain Controller, ADC), a mobile data center (Mobile Data Center, MDC), and the like. For example, the in-vehicle device and the vehicle may be integrated (for example, disposed inside the vehicle); or the in-vehicle device and the vehicle may be separated (for example, the in-vehicle device may be implemented in a form of a terminal device or the like). The terminal device herein may be, for example, an in-vehicle device such as a head unit. Alternatively, the terminal apparatus may be a processing apparatus, for example, a processing chip or a processor, and may be disposed inside an in-vehicle device, for example, a processor in a head unit, or may be disposed outside an in-vehicle device and communicate with the in-vehicle device in a wired or wireless manner. In addition, it should be understood that, based on an actual use requirement, the vehicle may be replaced with another vehicle or transportation means like a train, an aircraft, or a mobile platform. This is not limited in this application. Alternatively, the terminal apparatus may be a virtual reality (Virtual Reality, VR) device, an augmented reality (Augmented Reality, AR) device, a mixed reality (Mixed Reality, MR) device, or the like. In conclusion, a specific type of the terminal apparatus is not limited in embodiments of this application, and the terminal apparatus may be any device having at least two system partitions.

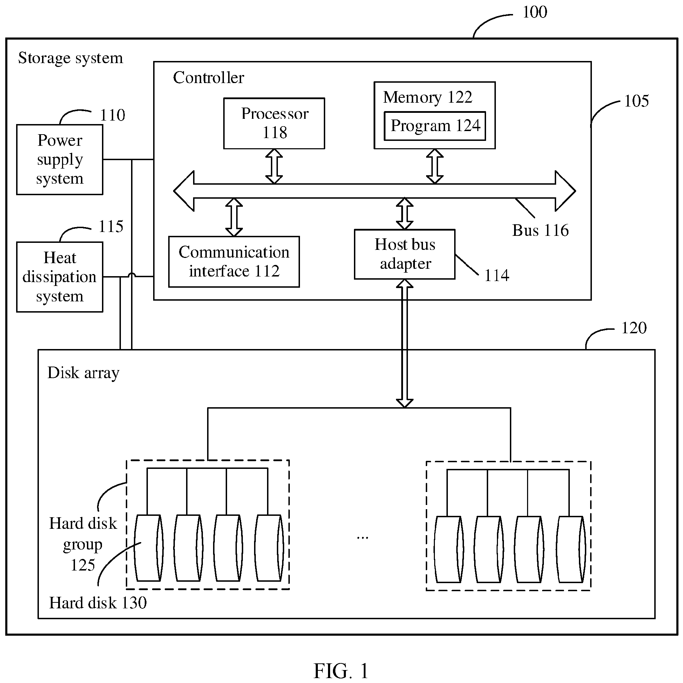

FIG. 1 is a diagram of a structure of a terminal apparatus. The terminal apparatus may be any one of the foregoing listed terminal apparatuses. As shown in FIG. 1, the terminal apparatus may include a storage system 100. The storage system 100 may include a controller 105, a disk array 120, a power supply system 110, and a heat dissipation system 115. It may be understood that components shown in FIG. 1 do not constitute a specific limitation on the terminal apparatus. The terminal apparatus in embodiments of this application may include more or fewer components than those shown in FIG. 1. For example, in addition to the storage system 100, the terminal apparatus may further include another components such as a display, a camera, various sensors, a mobile communication module, a wireless communication module, and an audio module. Details are not described in embodiments of this application. In addition, a combination/connection relationship between the components in FIG. 1 may also be adjusted and modified.

The controller 105 is a "brain" of the storage system 100. The controller 105 includes a processor (processor) 118, a communication interface 112, a memory (memory) 122, a communication bus (bus for short) 116, and a host bus adapter (Host Bus Adapter, HBA) 114. The processor 118, the communication interface 112, the memory 122, and the HBA 114 complete mutual communication through the communication bus 116.

The communication interface 112 may be a service access interface of the controller 105, and the controller 105 may communicate with external devices such as a host and the storage array 120 through the communication interface 112. For example, the controller 105 may receive an access request of a host for the disk array 120 through the communication interface 112.

The HBA 114 is a circuit board or an integrated circuit adapter that provides input/output (Input/Output, I/O) processing and a physical connection between the controller 100 and the disk array 120. It may be understood that, in an actual application, the controller 100 may communicate with the disk array 120 through another communication interface device in addition to the HBA. For example, the controller 100 may communicate with the disk array 120 directly via an Ethernet controller.

The memory 122 is configured to store a program 124. The memory 122 may include a highspeed RAM memory, or may further include a non-volatile memory (non-volatile memory). It may be understood that, the memory 122 may be various non-transitory (non-transitory) machine-readable media that can store program code, such as a random access memory (Random Access Memory, RAM), a magnetic disk, a hard disk drive, a USB flash drive, a removable hard disk drive, an optical disc, a solid state drive (Solid State Drive, SSD), or another non-volatile memory.

The program 124 may include program code, where the program code includes a computer operation instruction.

The processor 118 may be a central processing unit CPU, or an application specific integrated circuit (Application Specific Integrated Circuit, ASIC), or one or more integrated circuits that can implement embodiments of this application. The processor 118 may implement different functions based on different software programs. For example, the processor 118 may process data in a hard disk 130 based on a service request for accessing the hard disk 130 (for example, run an operating system based on the data in the hard disk 130). In embodiments of this application, the processor 118 is configured to execute the program 124, and may specifically perform related steps in the following method embodiments.

Although the controller 105 shown in FIG. 1 is located in the storage system 100, in some cases, the controller 105 may be located outside the storage system or located at a location far from the storage system. In addition, even though FIG. 1 provides merely an example of one controller 105, in an actual application, there may be a plurality of controllers 105. For example, if there are a plurality of controllers 105, when one controller is faulty, another controller may take over work of the faulty controller, to control the disk array 120, and ensure normal work of the storage system 100.

The disk array 120 is configured to store data. It should be noted that, the disk array 120 may alternatively be replaced with one or more hard disks. For example, if the terminal apparatus has a small amount of data, there may be only one or more hard disks, and no disk array is required. This specification mainly uses the disk array 120 as an example for description, but the terminal apparatus does not definitely have a disk array, and the terminal apparatus may have one or more hard disks. This is not limited herein. For example, the disk array 120 may include a redundant array of independent disks (Redundant Array of Independent Disks, RAID). In an actual application, there may be one or more disk arrays 120. The disk array 120 may include one or more hard disk groups 125, and each hard disk group 125 includes one or more hard disks (Hard Disk Drive, HDD) 130. It should be noted that, the hard disk 130 is merely an example of a memory constructing the disk array 120. The memory in embodiments of this application may include a solid state drive (Solid State Drive, SSD), or an apparatus, such as a cabinet or server constructed by a plurality of hard disks. This is not limited herein.

As shown in FIG. 1, the disk array 120 may be connected to the controller 105 through a bus interface (for example, the HBA 114). For example, the disk array 120 may be connected to the controller 105 through a SAS interface, a SCSI interface, or a SATA interface. This is not limited herein. For example, the disk array 120 is connected to the controller 105 through the SAS interface. The disk array 120 may include a serial attached SCSI (Serial Attached SCSI, SAS) expander (Expander) and a plurality of hard disks 130. The HBA 114 in the controller 105 is connected to the SAS expander, and is connected to the plurality of hard disks 130 through the SAS expander. A person skilled in the art may know that the SAS expander may include a plurality of ports, and may be configured to expand a capacity of the disk array 120. For example, the SAS expander may be an expander with 12 ports, 28 ports, or 36 ports. This is not limited herein. It may be understood that, the disk array 120 may include a plurality of SAS expanders, and the hard disks 130 in each hard disk group 125 may be connected through the SAS expander.

In some embodiments, to facilitate management on the hard disks 130, the plurality of hard disks 130 in the storage system 100 may be divided into a plurality of hard disk groups 125. One hard disk group 125 includes at least one hard disk 130. It should be noted that, when one hard disk group 125 includes a plurality of hard disks 130, resources of a plurality of hard disks 130 belonging to a same hard disk group 125 do not conflict. The resources in embodiments of this application are factors that can affect normal work of the hard disk, such as power supply, heat dissipation, and vibration. For example, the plurality of hard disks 130 belonging to the same hard disk group 125 may work simultaneously, and the plurality of hard disks 130 belonging to the same hard disk group 125 may be simultaneously powered on or powered off. In embodiments of this application, a hard disk 130 is scheduled in a unit of a hard disk group 125. One service request may be processed by one or more hard disks 130 in one hard disk group 125. For example, a plurality of hard disks 130 in a hard disk group 125 may construct a redundant array of independent disks (Redundant Arrays of Independent Disks, RAID), and the plurality of hard disks 130 in the hard disk group 125 can simultaneously read data blocks in one stripe (stripe) based on a received service request. A person skilled in the art may know that, the stripe (stripe) described in embodiments of this application is a set of data blocks that are written in parallel into the hard disks 130 that construct the RAID. The data blocks in the stripe have a same size, and data blocks in a same stripe have a same offset location in each memory. The data blocks in the stripe may also be referred to as strips (strips), and the strips are consecutive address blocks on one extent. It should be noted that, in embodiments of this application, one service request is not processed by a plurality of hard disk groups 125 cooperatively. In embodiments of this application, the service request may include a read request and a write request for data stored in the storage system 100.

The power supply system 110 may supply power to the controller 105 and the disk array 120. The heat dissipation system 115 may dissipate heat for the controller 105 and the disk array 120. Specifically, the power supply system 110 may include one or more power modules. The heat dissipation system 115 may dissipate heat for the hard disk 130 and the controller 105 via a device like an air conditioning system or a fan. Specific types of the power supply system 110 and the heat dissipation system 115 are not limited herein. In the storage system 100 shown in FIG. 1, an example in which the controller 105 and the disk array 120 share one power supply system 110 and one heat dissipation system 115 is used. In an actual application, the controller 105 and the disk array 120 may use different power supply systems and heat dissipation systems. This is not limited herein.

In embodiments of this application, the terminal apparatus may include N partitions, and the N partitions are storage areas separately used to store data of different functions in the terminal apparatus. The N partitions may be located in different hard disk groups in the disk array 120 in FIG. 1, or different disks in a same hard disk group, or different areas of a same disk in a same hard disk group, or the like. The controller 105 (for example, the processor 118 in the controller 105) may read data in a partition based on a first partition table (which records a data storage address of the partition), to run an operating system. For example, the first partition table includes a data storage address 1 of a partition 1 and a data storage address 2 of a partition 2. The processor 118 sends a service request to the disk array 120 through the HBA 114, where the service request includes the data storage address 1 and the data storage address 2. The disk array 120 reads data based on the data storage address 1, and reads data based on the data storage address 2, so that the processor 118 runs the operating system based on the read data. The previous service request carries both the data storage address 1 of the partition 1 and the data storage address 2 of the partition 2. It may be understood that the data storage address 1 of the partition 1 and the data storage address 2 of the partition 2 may alternatively correspond to two different service requests. For example, a service request 1 carries the data storage address 1 of the partition 1, and a service request 2 carries the data storage address 2 of the partition 2. The first partition table may be stored in the memory 122 or a disk in the disk array 120. This is not limited in embodiments of this application.

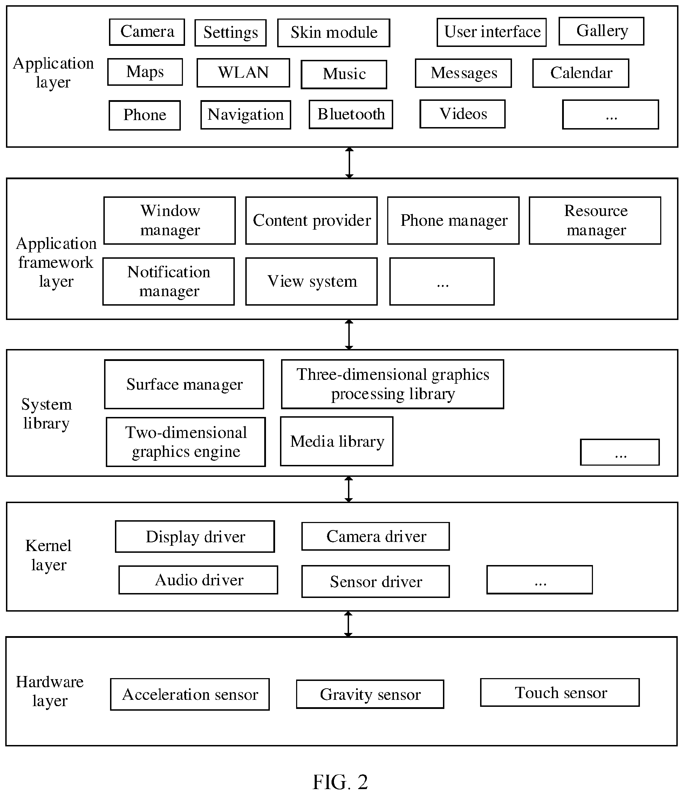

FIG. 2 is a diagram of a software structure of a terminal apparatus according to an embodiment of this application.

For example, the software structure of the terminal apparatus may be a layered architecture. For example, software may be divided into several layers, and each layer has a clear role and task. The layers communicate with each other through a software interface. As shown in FIG. 2, the electronic device may include an application program layer (application layer for short), an application framework layer (framework layer for short) (framework, FWK), a hardware layer, and the like.

The application package may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions. For example, the application framework layer may include a window manager, a content provider, a view system, a phone manager, a resource manager, a notification manager, and the like. The window manager is configured to manage a window program. The window manager may obtain a size of a display, determine whether there is a status bar, perform screen locking, take a screenshot, and the like. The content provider is configured to store and obtain data, and enable the data to be accessed by an application. The data may include a video, an image, audio, calls that are made and received, a browsing history, a bookmark, a phone book, and the like. The view system includes visual controls such as a control for displaying a text and a control for displaying an image. The view system may be configured to construct an application. A display interface may include one or more views. For example, a display interface including a messages notification icon may include a text display view and an image display view. The phone manager is configured to provide a communication function of the electronic device 100, for example, management of a call status (including answering, declining, or the like). The resource manager provides various resources such as a localized character string, an icon, a picture, a layout file, and a video file for an application. The notification manager enables an application to display notification information in a status bar, and may be configured to convey a notification type message. The displayed notification information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device vibrates, or the indicator light blinks.

The system library may include a plurality of function modules, for example, a surface manager (surface manager), a media library (Media Library), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playing and recording in a plurality of commonly used audio and video formats, and static image files. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

The hardware layer includes hardware in the terminal apparatus, for example, various sensors (an acceleration sensor, a gravity sensor, and a touch sensor) and a display.

It should be noted that FIG. 2 is an example of the software structure of the terminal apparatus. In an actual application, the software structure of the terminal apparatus may include more or fewer layers than those shown in FIG. 2, or each layer includes more or fewer modules than those shown in FIG. 2, or a location relationship between layers may be adjusted, and the like. In conclusion, the software structure shown in FIG. 2 does not constitute a specific limitation on the software structure of the terminal apparatus.

The first partition table in embodiments of this application may be stored at any one of the plurality of layers shown in FIG. 2, for example, the application layer, the framework layer, the system layer, or the kernel layer. For example, the first partition table is stored at the kernel layer. Generally, information at the kernel layer is invisible to an upper layer (the application layer, the system layer, the framework layer, or the like). Therefore, when the first partition table is stored at the kernel layer, confidentiality is good, and security is high. For example, the first partition table is stored on an upper side (for example, the application layer, the framework layer, or the system layer) of the kernel layer. Because the upper layer has a high service association degree with the terminal apparatus (for example, the application layer includes various applications, and when an application runs a service, the application invokes a software module at the system layer through an API interface at the framework layer, to invoke underlying hardware to implement the service), the upper layer may update the first partition table based on a service requirement (refer to the following descriptions). In this way, flexibility of the first partition table is higher, and an updated first partition table is more suitable for a service requirement of the user. For example, the first partition table is stored at the kernel layer. The system layer may obtain a latest first partition table, then read, based on the first partition table, data stored in the partition, and run an operating system of the terminal apparatus based on the data.

The following describes technical solutions of this application in detail with reference to accompanying drawings.

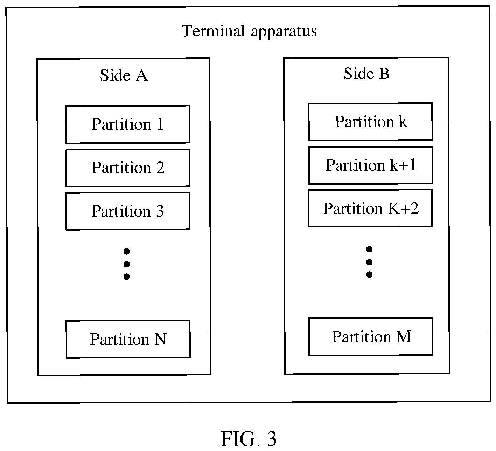

To implement seamless upgrade, the terminal apparatus may include two system partitions: a first system partition and a second system partition. The first system partition is also referred to as a system partition A or a side A, and the second system partition is also referred to as a system partition B or a side B, as shown in FIG. 3. The side A and the side B may correspond to different versions of a same operating system, or may correspond to different operating systems. That the side A and the side B correspond to different versions of a same operating system is used as an example. For example, the side A corresponds to an earlier version of HarmonyOS^{®}, and the side B corresponds to a later version of HarmonyOS^{®}. It is assumed that the terminal apparatus currently runs on the side A. When the terminal apparatus needs to be upgraded to the later version, the terminal apparatus may be switched from the side A to the side B, to implement system upgrade. This upgrade manner is also referred to as A/B upgrade. If the upgrade fails, the terminal apparatus can still run on the side A, normal use of a user is not affected, and this is seamless upgrade.

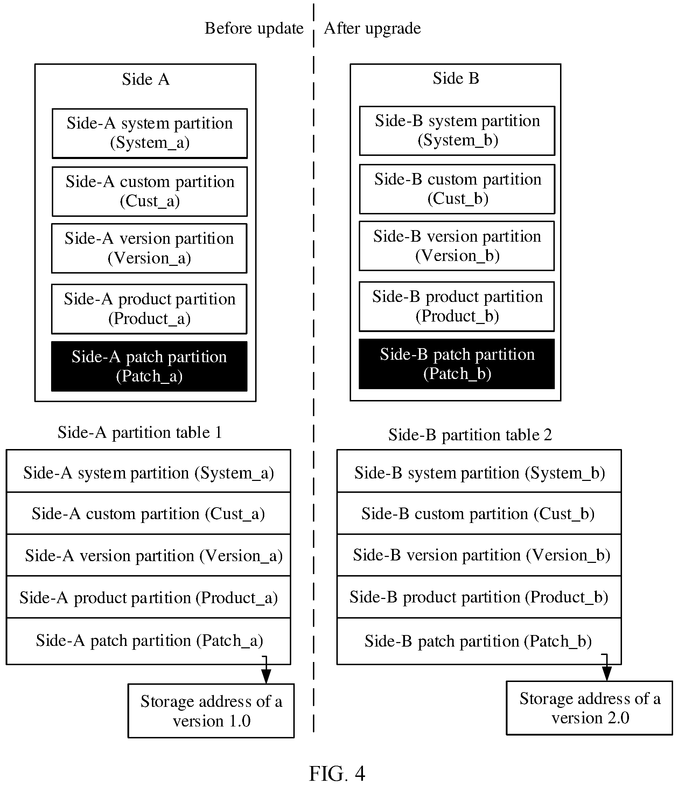

Still as shown in FIG. 3, the side A and the side B each may include a plurality of partitions, and different partitions are used to store data of different functions in the terminal apparatus. For example, the side A includes a partition 1 to a partition n, and the side B includes a partition k to a partition m. The partitions of the side A do not overlap the partitions of the side B. For example, the side A and the side B include a same number of partitions and same types of partitions, which are a system (System) partition, a custom (Cust) partition, a version (Version) partition, a product (Product) partition, and a patch (Patch) partition respectively. To distinguish the partitions of the side A from those of the side B, a suffix "_a" is added to names of the partitions of the side A and a suffix "_b" is added to names of the partitions of the side B. For example, as shown in FIG. 4, the side A includes: a side A system (System_a) partition, a side A custom (Cust_a) partition, a side A version (Version_a) partition, a side A product (Product_a) partition, and a side A patch (Patch_a) partition. The side B includes: a side B system (System_b) partition, a side B custom (Cust_b) partition, a side B version (Version _b) partition, a side B product (Product_b) partition, and a side B patch (Patch_b) partition. Different partitions are used to store data of different functions. For example, the system partition may be used to store system data, for example, include an entire operating system and pre-installed software. The product partition is used to store product data, for example, operator-related information. A user partition is used to store various personalized user data, for example, music, videos, and pictures.

Still as shown in FIG. 4, the terminal apparatus stores a partition table 1 of the side A and a partition table 2 of the side B. The partition table may further have another name, for example, a partition mapping relationship table. The partition table stores information about all partitions of a corresponding side. For example, the side A corresponds to the partition table 1, and the partition table 1 stores information about all partitions of the side A, for example, a partition name and a storage address (including a start address and an end address) of each partition of the side A. In this way, the terminal apparatus may read data based on the storage address of each partition in the partition table 1, to run on the side A. For another example, the side B corresponds to the partition table 2, and the partition table 2 stores information about all partitions of the side B, for example, a partition name and a storage address (including a start address and an end address) of each partition of the side B. In this way, the terminal apparatus may read data based on the storage address of each partition in the partition table 2, to run on the side B.

Currently, the partition table 1 of the side A and the partition table 2 of the side B are written into the terminal apparatus (written into the kernel layer shown in FIG. 2) before delivery of the terminal apparatus, and are not editable or changeable. Because the partition tables are not editable or changeable, some problems are caused. For example, when the terminal apparatus is upgraded, the terminal apparatus needs to be switched from the side A to the side B. Because both the partition table 1 of the side A and the partition table 2 of the side B are fixed, the partition table 1 of the side A needs to be completely switched to the partition table 2 of the side B. However, there is a case in which, for example, only some partitions of the side B are upgraded in comparison with the side A, and some partitions are not upgraded. In this case, the partitions that are not upgraded also need to be completely switched to the partition table 2, and this may definitely affect upgrade efficiency. In addition, because the partition table 1 needs to be completely switched to the partition table 2, upgrade can be implemented only after a shutdown and a restart are performed. Consequently, it is not convenient to operate.

For ease of understanding, an example is used. Still as shown in FIG. 4, the side A is HarmonyOS^{®}1.0, and corresponds to the partition table 1, and the side B is HarmonyOS^{®}2.0, and corresponds to the partition table 2. The Patch_a partition in the partition table 1 is different from the Patch_b partition in the partition table 2. For example, the Patch_a partition corresponds to a data storage address of the version 1.0, for example, /dev/block/sdd1.0. The Patch_b partition corresponds to a data storage address of the version 2.0, for example, /dev/block/sdd2.0. Other partitions in the partition table 1 are the same as those in the partition table 2. For ease of understanding, in FIG. 4, different partitions of the side A and the side B are marked with a dark background color, and same partitions are not marked with the dark background color. Before upgrade, the terminal apparatus traverses the partition table 1 to read data, so as to run on the side A. After upgrade, the terminal apparatus traverses the partition table 2 to read data, so as to run on the side B. It is clear that, for a same partition of the side A and the side B, the partition also needs to be traversed again. This reduces upgrade efficiency.

An embodiment of this application provides a system running method. In the method, a terminal apparatus includes N partitions, where N is a positive integer, and the N partitions are storage areas used to store data of different functions in the terminal apparatus. The terminal apparatus obtains a first partition table, where the first partition table includes information about at least one of the N partitions. For example, the first partition table may include a partition 1 and a partition 2, or may include a partition 3 and a partition 4. This is flexible. In addition, the first partition table is updatable. For example, the first partition table originally includes some partitions of the N partitions, and after being updated, the first partition table includes some other partitions of the N partitions, to implement flexible combination of partitions. The terminal apparatus reads data based on a latest first partition table to run an operating system. In comparison with a conventional manner (that is, the partition table of the side A and the partition table of the side B are not updatable), this manner is more flexible, and provides some convenience for system optimization and upgrade.

### Embodiment 1

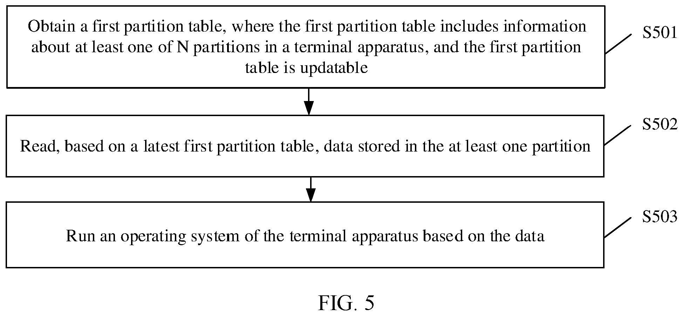

FIG. 5 is a schematic flowchart of a system running method according to an embodiment of this application. The method is applicable to a terminal apparatus. For the terminal apparatus, refer to the foregoing descriptions. As shown in FIG. 5, the procedure includes the following steps.

S501: Obtain a first partition table, where the first partition table includes information about at least one of the N partitions, and the first partition table is updatable.

The partition may be understood as a storage area used to store data of different functions in the terminal apparatus, for example, different disks (for example, a drive C and a drive D), or different storage areas of a disk (for example, a drive C). For example, the N (N is a positive integer) partitions may include a system partition, a Cust partition, a version partition, a product partition, and a patch partition. Three partitions are used as an example. The system partition stores system data. The HarmonyOS^{®} system is used as an example. The system partition stores underlying software of the HarmonyOS^{®} system. The product partition stores product data, for example, operator-related information. A user partition stores user data, for example, personalized user data, like an application downloaded by a user, a photographed image, and a sent instant messaging message. The following uses three partitions: the system partition, the product partition, and the user partition as an example. Other partitions are not described in detail. In addition, there may be a plurality of partitioning manners, for example, a Google native partitioning manner, and a partitioning manner of a fixed partition table of HarmonyOS. Details are not described in this application.

In some embodiments, the N partitions may not be distinguished between a side A and a side B. For example, the terminal apparatus includes 12 partitions, that is, a partition 1 to a partition 12, and the 12 partitions do not distinguish between a partition of the side A or a partition of the side B. The first partition table may include at least one of the 12 partitions.

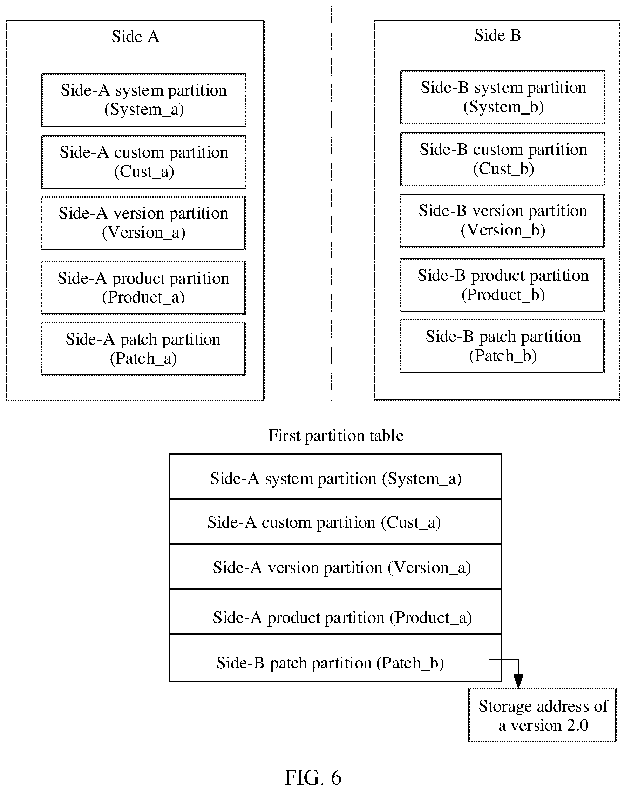

In some other embodiments, the N partitions may be distinguished between a side A and a side B. For example, the terminal apparatus includes 12 partitions, that is, a partition 1 to a partition 12. In the 12 partitions, the partition 1 to the partition 6 are partitions of the side A, and the partition 7 to the partition 12 are partitions of the side B. In this case, that the first partition table may include at least one of the 12 partitions includes one case, that is, the first partition table includes at least one of all the partitions of the side A and at least one of all the partitions of the side B. In other words, the first partition table is a combination of partitions of the side A and the side B. For ease of understanding, for example, with reference to FIG. 6, the first partition table includes a System_a partition, a Cust_a partition, a Version_a partition, and a Product_a partition of the side A, and a Patch_b partition, where the previous four partitions are partitions of the side A, and the last partition is a partition of the side B. FIG. 6 and FIG. 4 are compared. A difference between the partition table in FIG. 6 and the partition table in FIG. 4 lies in that, in FIG. 4, the partition table 1 of the side A and the partition table 2 of the side B are written into the terminal apparatus before delivery of the terminal apparatus and are not editable, the partition table 1 of the side A includes only information about the partition of the side A, the partition table 2 of the side B includes only information about the partition of the side B, the two partition tables are independent of each other, and there is no combination of the partition of the side A and the partition of the side B; however in FIG. 6, the first partition table may include the partition of the side A, and may also include the partition of the side B, and this is more flexible.

In conclusion, in this embodiment of this application, the terminal apparatus is divided into the N partitions, so that management can be easily performed, and flexible combination of different partitions in the N partitions can be implemented for the first partition table. In addition, to avoid an error when data is written into each partition, the terminal apparatus may determine in advance a data storage address of each partition, for example, a start address and an end address. When data is written into each partition, writing may start from the start address, and stop at the end address. In this way, data in each partition is not written to an incorrect area. In addition, the written data may be further checked to determine that the written data is reliable and complete.

For example, the first partition table may be obtained in a plurality of manners in S501.

For example, the first partition table exists by default before delivery of the terminal apparatus. For example, the first partition table may be stored at any one of an application layer, a framework layer, and a kernel layer of the terminal apparatus. A difference between this application and the conventional technology described above lies in that, in the conventional technology, the partition table 1 of the side A and the partition table 2 of the side B are fixed at the kernel layer before delivery of the terminal apparatus; however, in this application, the first partition table may be at any layer of the application layer, the framework layer, the system layer, or the kernel layer. For example, the first partition table is stored at the kernel layer. Generally, information at the kernel layer is invisible to an upper layer (the application layer, the system layer, the framework layer, or the like). Therefore, when the first partition table is stored at the kernel layer, confidentiality is good, and security is high. For example, the first partition table is stored on an upper side (for example, the application layer, the framework layer, or the system layer) of the kernel layer. Because the upper layer has a high service association degree with the terminal apparatus (for example, the application layer includes various applications, and when an application runs a service, the application invokes a software module at the system layer through an API interface at the framework layer, to invoke underlying hardware to implement the service), the upper layer may update the first partition table flexibly and in a timely manner based on a service requirement. In this way, flexibility of the first partition table is higher, and an updated first partition table is more suitable for a service requirement of a user. For example, when a service needs to be upgraded, if a partition that supports the service includes a system partition, an upper layer may download an upgrade package for the service, record a storage address of the upgrade package, and update a current partition of the system partition in the first partition table based on the storage address.

For another example, the first partition table is set by the user. For example, the user may select several partitions in the N partitions to combine to generate the first partition table.

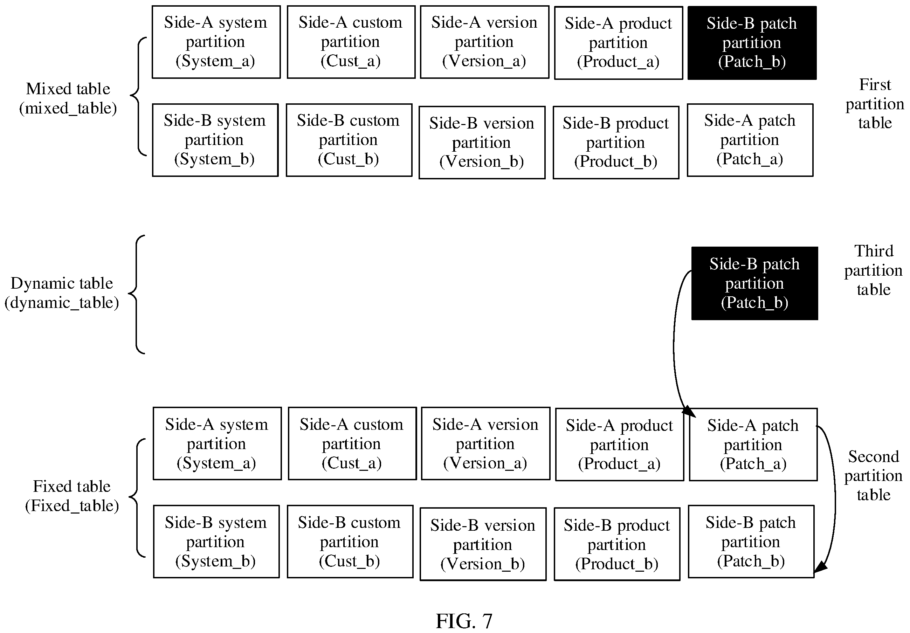

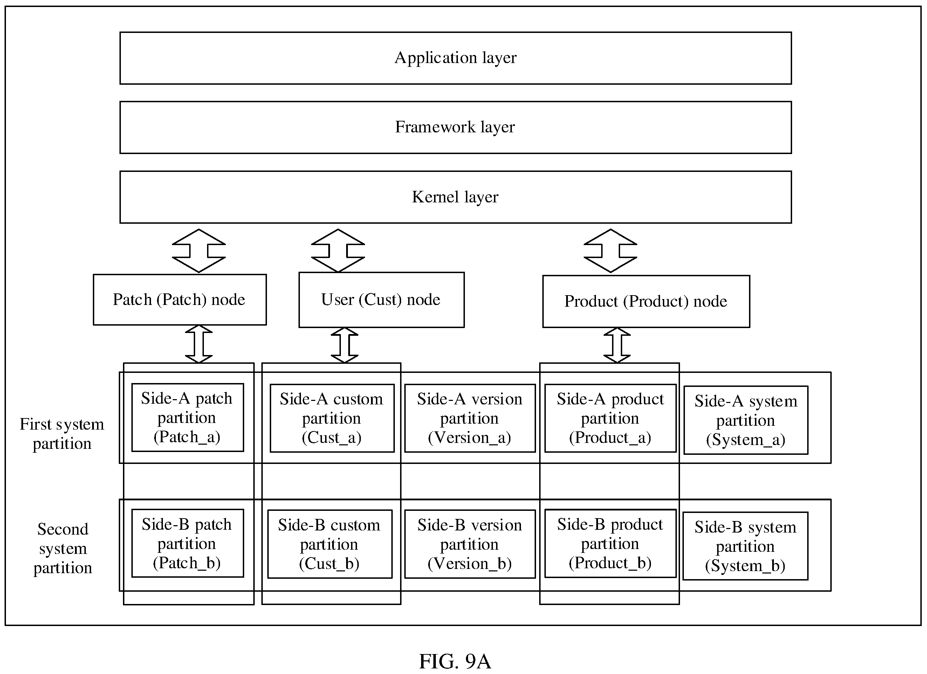

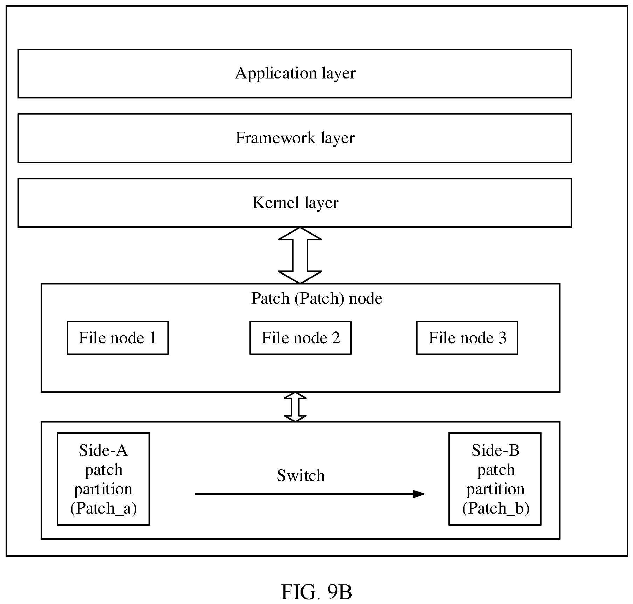

For another example, the first partition table may alternatively be generated based on a combination of a second partition table and a third partition table. The second partition table is a non-editable partition table written before delivery of the terminal apparatus, that is, the partition table 1 of the side A and the partition table 2 of the side B in FIG. 4. The third partition table is obtained based on the upgrade package. For example, the terminal apparatus downloads the upgrade package, where the upgrade package is used to upgrade the partition 1 in the N partitions. For example, the upgrade package includes an installation package of a later version of the partition 1. The terminal apparatus stores the later version of the partition 1 in an address 1 based on the installation package, and records the partition 1 and the address 1 in the third partition table. Simply speaking, the third partition table may be understood as a partition corresponding to the upgrade package and a storage address of the upgrade package. The terminal apparatus may mix the third partition table and the second partition table to obtain the first partition table. It may be understood that the second partition table also includes an address 2 (an installation package of an earlier version) of the partition 1, and the third partition table also includes the address 1 (the installation package of the later version) of the partition 1. In a possible mixing manner, the first partition table is obtained by superimposing the address 1 on an upper layer of the address 2 of the partition 1 in the second partition table (for example, an implementation is a process in FIG. 9A and FIG. 9B, and reference may be made to the following descriptions). In some embodiments, the first partition table may also include the address 1 and the address 2, and a priority of the address 1 is marked higher than that of the address 2. For example, with reference to FIG. 7, the first partition table is represented as a mixed table (mixed_table), the second partition table is represented as a fixed table (fixed _table), that is, a non-editable table written before delivery, and the third partition table is represented as a dynamic table (dynamic _table), where the table is obtained based on the upgrade package. The mixed_table may be obtained by mixing the fixed_table and the dynamic_table. For example, a patch_b partition in the dynamic_table is superimposed on an upper layer of a patch_a partition in the second partition table, to obtain the first partition table. In some embodiments, still as shown in FIG. 7, after the patch_b partition in the dynamic_table is superimposed on the upper layer of the patch_a partition in the second partition table, the covered patch_a partition is superimposed on a patch_b partition in the second partition table. It can be learned that the original patch_a partition in the partition table of the side A and the patch_b partition in the partition table of the side B are exchanged. This is more flexible in comparison with a conventional partition table (both the partition table of the side A and the partition table of the side B are not updatable).

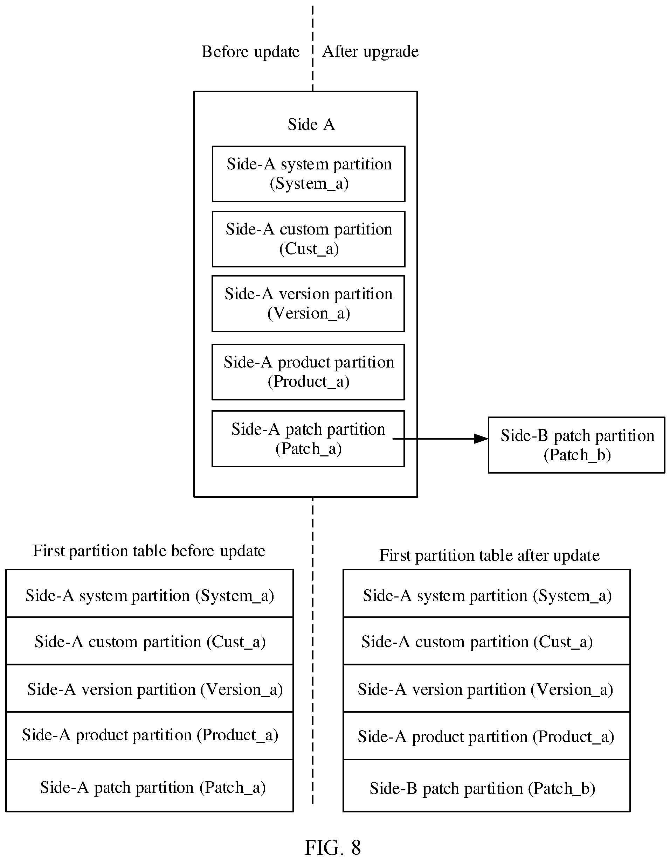

In this embodiment of this application, the first partition table is updatable. For example, a partition combination included in the first partition table is updatable. For example, the first partition table originally includes the partition 1 and the partition 2 in the N partitions. After the update, the first partition table includes the partition 3 and the partition 4 in the N partitions. Certainly, the first partition table before and after update may alternatively be the same. In other words, the first partition table is a flexible combination of different partitions in the N partitions. For example, with reference to FIG. 8, the first partition table originally includes the partition of the side A. When it is determined that the patch_a partition of the side A needs to be upgraded to the patch_b partition of the side B, the first partition table is updated. In an updated first partition table, the original patch_a partition of the side A is replaced with the patch_b partition of the side B, and other partitions do not need to be updated. For ease of understanding, FIG. 8 and FIG. 4 are compared. In FIG. 4, before the upgrade, the terminal apparatus runs on the side A based on the partition table 1 of the side A, is switched to the side B during the upgrade, and runs on the side B based on the partition table 2 of the side B. Because the partition table 1 and the partition table 2 are independent and are not updatable, even if the partition tables of the side A and the side B have a same partition, the partition tables need to be traversed again. However, in FIG. 8, the first partition table is editable. When a partition of the side A needs to be upgraded, only the partition in the first partition table needs to be updated, and the terminal apparatus runs based on the updated first partition table. In other words, a partition that is not updated in the first partition table does not need to be traversed again, and only an updated partition (for example, the patch_a partition is updated to the patch_b partition) needs to be reloaded. It is clear that efficiency is higher than that of the upgrade manner in FIG. 4.

For another example, when a partition needs to be upgraded, the terminal apparatus may further download an upgrade package for the partition, and update the partition in the first partition table based on the upgrade package. For example, it is assumed that the first partition table includes a partition 1 to a partition 3. The terminal apparatus downloads an upgrade package, where the upgrade package is used to upgrade the partition 1. For example, the upgrade package includes an installation package of a later version of the partition 1. The terminal apparatus stores the installation package of the later version of the partition 1 at an address 1, and updates a current storage address of the partition 1 in the first partition table to the address 1. Herein, "updating a current storage address of the partition 1" to "the address 1" may be understood as replacing the current storage address with the address 1, or mounting the address 1 to the current storage address.

In a possible case, the upgrade package downloaded by the terminal apparatus can upgrade both partitions in the first partition table. For example, in a possible scenario, the first partition table includes the partition 1 of the side A and the partition 2 of the side B, and the partition 1 and the partition 2 are a same partition of different sides. For example, the partition 1 is patch_a, and a version is 1.0, and the partition 2 is patch _b, and a version is 2.0. It is assumed that the upgrade package is a version 3.0 of the patch partition, that is, the upgrade package can upgrade both the partition 1 and the partition 2. In this case, the terminal apparatus may upgrade both the partition 1 and the partition 2, or determine, based on priorities, a partition to be upgraded. For example, in a manner 1, a partition that is being used has a lower priority. For example, if the terminal apparatus is using the partition 1 and does not use the partition 2, the partition 2 is preferentially upgraded, that is, a data storage address of the partition 2 in the first partition table is updated to a first storage address, where the first storage address is a storage address of the upgrade package. In a manner 2, the partition with an earlier version has a higher priority. For example, the partition 1 is a version 1.0, and the partition 2 is a version 2.0, that is, a priority of the partition 1 is higher than that of the partition 2. The partition 1 may be preferentially upgraded, that is, a current storage address of the partition 1 in the first partition table is updated to a first storage address, where the first storage address is a storage address of the upgrade package. In a manner 3, a partition with a lower use frequency has a higher priority. For example, if a use frequency of the partition 1 is lower than a use frequency of the partition 2, the partition 1 is preferentially upgraded, that is, a current storage address of the partition 1 in the first partition table is updated to a first storage address, where the first storage address is a storage address of the upgrade package.

In some embodiments, the terminal apparatus may upgrade a partition in the first partition table in a hot upgrade or cold upgrade manner. A difference between the hot upgrade and the cold upgrade lies in that, after the hot upgrade, a device does not need to be restarted, and normal running is not affected, but after the cold upgrade, the device needs to be restarted to take effect. Specific manners of the hot upgrade and the cold upgrade are not described in detail in this application. In some embodiments, the terminal apparatus may further determine a to-be-upgraded partition is applicable to the hot upgrade or the cold upgrade. If the to-be-upgraded partition is applicable to the hot upgrade, the hot upgrade manner is used; or if the to-be-upgraded partition is applicable to the cold upgrade, the cold upgrade manner is used. For example, a manner in which the terminal apparatus determines the to-be-upgraded partition is applicable to the cold upgrade or the hot upgrade may include: determining, based on an attribute of the partition, the partition is applicable to the cold upgrade or the hot upgrade. For example, the attribute of the partition includes: for a partition, each time a new version is released, a label is set for the partition of the new version, where the label indicates the partition is applicable to the hot upgrade or the cold upgrade. For example, when the label is 1, it indicates that the partition is applicable to the hot upgrade; or when the label is 0, it indicates that the partition is applicable to the cold upgrade. A difference between the hot upgrade and the cold upgrade is not described in detail in the specification.

The following uses the hot upgrade as an example to describe a partition upgrade process. For ease of understanding, the patch partition is still used as an example.

Generally, a partition (for example, a storage area in a drive C) may include one or more storage areas. For example, a partition is a storage area with a capacity of 1 G, and may be divided into a plurality of storage areas (which may be understood as sub-storage areas) with a smaller capacity. Different data may be stored in different storage areas in the partition. For example, the partition includes a storage area 1 to a storage area 3. Data 1 is stored in the storage area 1, data 2 is stored in the storage area 2, and data 3 is stored in the storage area 3. Data that is stored in each storage area is different. In addition, each storage area corresponds to a storage address. For example, a storage address of the data 1 may be a start address and an end address of the storage area 1.

The terminal apparatus (for example, the kernel layer) needs to read data from the partition to run an operating system. Therefore, storage addresses of different data in the partition need to be known. In an example, as shown in FIG. 9A, the kernel layer creates various file nodes, such as a patch node, a Cust node, and a product node. The file node may be understood as a directory used to record a data storage address, and corresponding data may be read through the directory. For example, the patch node corresponds to a patch_a partition or a patch_b partition, that is, a storage address of data in the patch_a partition or a storage address of data in the patch_b partition is stored in the patch node. Similarly, the Cust node corresponds to a Cust_a partition or a Cust_b partition. The product node corresponds to a product_a partition or a product_b partition. When the patch node corresponds to the patch_a partition, the Cust node corresponds to the Cust_a partition, and the product node corresponds to the product_a partition, the terminal apparatus may run a system based on the patch_a partition, the Cust_a partition, and the product_a partition, that is, run on the side A. When the patch node corresponds to the patch_b partition, the Cust node corresponds to the Cust_b partition, and the product node corresponds to the product_b partition, the terminal apparatus may run a system based on the patch_b partition, the Cust_b partition, and the product_b partition, that is, run on the side B.

The patch partition is used as an example. Upgrading the patch partition may be understood as that the patch node originally corresponds to the patch_a partition and needs to be switched to the corresponding patch_b partition. For ease of understanding, with reference to FIG. 9B, upgrading the patch partition may be understood as switching from the patch_a partition to the patch_b partition, so that the patch node is switched from originally corresponding to the patch_a partition to corresponding to the patch_b partition.

In some examples, when the patch node is switched from the patch_a partition to the patch_b partition, the patch_a partition may be in a working state. In this case, the patch_b partition may be accessed to the working patch_a partition in a direct mounting manner (for example, a data storage address of the patch_b partition is directly mounted to a directory of the patch_a partition) or a manner of unmounting and then mounting manner, for example, the patch_a partition is unmounted first, and then the data storage address of the patch_b partition is mounted to the patch node. This upgrade manner is the hot upgrade. The upgrade can be completed without restarting the device, and the current work is not affected.

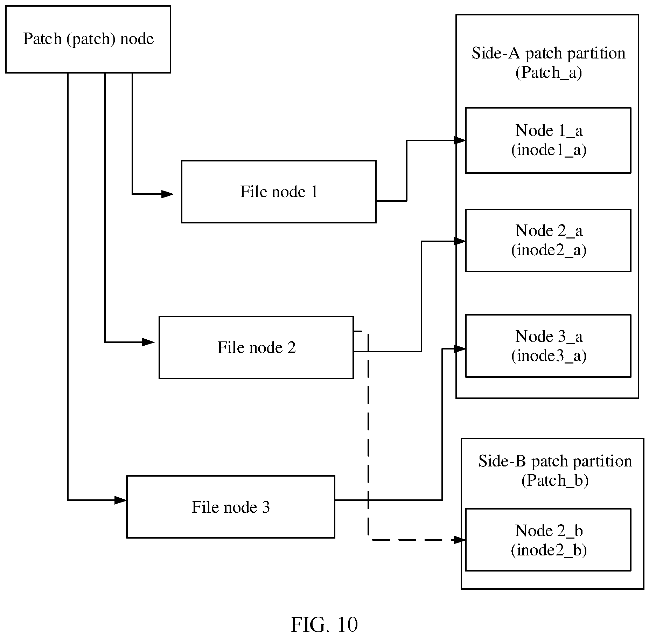

With reference to FIG. 9B and FIG. 10, the following describes a specific implementation principle of switching the partition corresponding to the patch node from the patch_a partition to the patch_b partition.

It is assumed that the patch_a partition includes three storage areas, for example, three storage areas (which may also be referred to as a storage node or an actual node): inode1_a, inode2_a, and inode3_a shown in FIG. 10, and the three storage areas store different data of the patch_a partition. To record storage addresses of data in the three storage areas, the patch node in FIG. 9B includes three file nodes, that is, a file node 1 to a file node 3. The file node 1 corresponds to the inode1_a and is used to record a storage address of data in the inode1_a. The file node 2 corresponds to the inode2_a and is used to record a storage address of data in the inode2_a. The file node 3 corresponds to the inode3_a and is used to record a storage address of data in the inode3_a. For this correspondence, refer to FIG. 10. In this way, the kernel layer may read, based on the data storage address recorded in the file node 1, the data stored in the actual node inode1_a in the patch_a partition. Similarly, the kernel layer may read, based on the data storage address recorded in the file node 2, the data stored in the actual node inode2_a in the patch_a partition; and read, based on the data storage address recorded in the file node 3, the data stored in the actual node inode3_a in the patch_a partition.

In some examples, the file node may be marked by using a virtual machine node of a corresponding node cache (inode_cache). For example, the file node 1 is marked as inode_cache1, the file node 2 is marked as inode_cache2, and the file node 3 is marked as inode_cache3. As described above, the file node may be understood as a directory used to record a data storage address. Therefore, the node cache corresponding to the file node may be understood as a cache used to store the directory, and may be a virtual machine or another form. In other words, different file nodes correspond to different node caches (which may be different virtual machines). The virtual machine node has a virtual machine node mark, which may be used to mark the file node. Therefore, the file node 1 to the file node 3 in FIG. 10 may be replaced with the inode_cache1 to the inode_cache3. However, it should be understood that the file nodes may also be marked in another manner, as long as different file nodes can be distinguished.

In some examples, the mark of the file node may be further used to mark that hot update can be performed on the file node. The patch node is used as an example. When the mark of the patch node indicates that hot update can be performed on the patch node, the terminal apparatus may upgrade the patch partition in the following manner, that is, the patch node is switched from the patch_a partition to the patch_b partition.

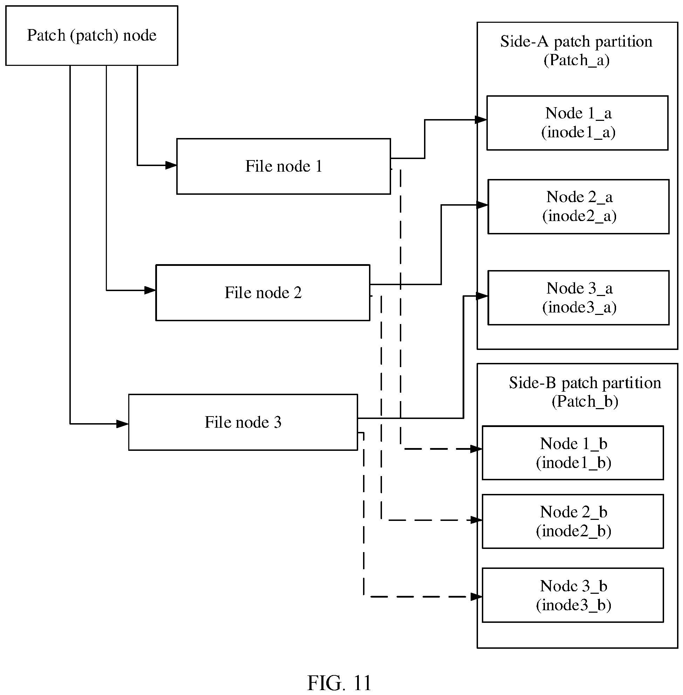

As described above, when the patch node needs to be switched from the patch_a partition to the patch_b partition, the patch node in FIG. 9B is switched from originally corresponding to the patch_a partition to corresponding to the patch_b partition. It is assumed that the patch_b partition also includes three storage areas, for example, three storage areas (which may also be referred to as a storage node or an actual node): inode1_b, inode2_b, and inode3_b shown in FIG. 11, and the three storage areas store different data of the patch_b partition. Because the three file nodes in the patch node in FIG. 9B, that is, the file node 1 to the file node 3, correspond to inode1_a, inode2_a, and inode3_a of the patch_a partition respectively, the file node 1 to the file node 3 need to be adjusted to correspond to the inode1_b, the inode2_b, and the inode3_b of the patch_b partition.

For ease of understanding, an example in which the file node 2 is adjusted from originally corresponding to the inode2_a to corresponding to the inode2_b is used for description. For example, the file node 2 needs to establish an association relationship with the inode2_b, and there may be a plurality of implementations of establishing the association relationship. For example, in a manner 1, the inode2_b is combined with the inode2_a, that is, the file node 2 corresponds to both the inode2_a and the inode2_b. In a manner 2, the inode2_a is replaced with the inode2_b. For example, the file node 2 originally corresponds to the inode2_a, and the inode2_a is replaced with the inode2_b. A manner 3 may be understood as further refinement of the manner 1. In other words, after the inode2_b and the inode2_a are combined, priorities of the inode2_b and the inode2_a may be set. For example, when a priority of the inode2_a is higher, the file node 2 corresponds to the inode2_a, or when a priority of the inode2_b is higher, the file node 2 corresponds to the inode2_b. Priorities of the inode2_a and the inode2_b may be set by a user, or specified in a downloaded upgrade package, or the like. This is not limited in this application. Alternatively, the terminal apparatus may further preferentially select the inode2_a or the inode2_b based on a running status. For example, it is considered that power consumption of the inode2_a of an earlier version is compared with that of the inode2_b of a later version. When a current operating power is low, the inode2_a may be selected; or when a current operating power is high, the inode2_b may be selected. In this way, an association relationship is established between the file node 2 and the inode2_b. In this way, the kernel layer can access data of the inode2_b in the inode_b partition via the file node 2. In a manner 4, a new inode is created. For example, an association relationship between the file node 2 and the new inode is established by using any one of the foregoing manners 1 to 3, and then the inode2_b is mounted to the new inode. In this way, the kernel layer can access data in the inode2_b via the file node 2 and the new inode. In a manner 5, a new file node is created, for example, a file node 4 is created, where the new file node may correspond to a new mark, for example, inode_cache4. There is an association relationship between the file node 4 and the inode2_b. Therefore, an association relationship between the file node 4 and the file node 2 may be established. In this way, an association relationship between the file node 2 and the inode2_b may be established. The association relationship between the file node 4 and the file node 2 may be established in a manner of file node switching, insertion, or combination. When the file node switching is used as an example, the file node 2 is switched (which may be understood as replaced with) to the file node 4. When the file node insertion is used as an example, the file node 1 to the file node 3 are originally included, the file node 4 is inserted, and the file node 4 is associated with the file node 2. When the file node combination is used as an example, the file node 2 and the file node 4 may be combined, for example, combined into a larger file node (that is, combined into a new directory).

In FIG. 10, an example in which the file node 2 is adjusted from originally corresponding to the inode2_a to corresponding to the inode2_b is used. For example, the file node 1 may also be adjusted from originally corresponding to the inode1_a to corresponding to the inode1_b. Similarly, the file node 3 may also be adjusted from originally corresponding to the inode3_a to corresponding to the inode3_b. Refer to FIG. 11. In this way, the kernel layer reads, based on the data storage address recorded in the file node 1, the data stored in the actual node inode1_b in the patch_b partition. Similarly, the kernel layer may read, based on the data storage address recorded in the file node 2, the data stored in the actual node inode2_b in the patch_b partition; and read, based on the data storage address recorded in the file node 3, the data stored in the actual node inode3_b in the patch_b partition.

After the patch node is switched from originally corresponding to the patch_a partition to corresponding to the patch_b partition, the first partition table is correspondingly updated. For example, before the update, the first partition table includes (System_a, Cust_a, Version_a, Product_a, Preload_a, Patch_a), and after the update, the first partition table changes to (System_a, Cust_a, Version_a, Product_a, Preload_a, (Patch_a: Patch_b)). (Patch_a: Patch_b) indicates that the Patch_a partition is upgraded to the Patch_b partition. Alternatively, before the update, the first partition table includes (System_a, Cust_a, Version_a, Product_a, Preload_a, Patch_a), and after the update, the first partition table changes to (System_a, Cust_a, Version_a, Product_a, Preload_a, Patch_b). In other words, the updated first partition table is flexibly combined by the partition of the side A and the partition of the side B.

In some examples, if the terminal apparatus uses the foregoing manner 1 or manner 3 (a manner of combining the inode2_b and the inode2_a), the updated first partition table may be represented as (System_a, Cust_a, Version_a, Product_a, Preload_a, (Patch_a: Patch_b)). (Patch_a: Patch_b) indicates that the patch node is a combination of the Patch_a partition and the Patch_b partition. It should be understood that, if the priority between the Patch_a partition and the Patch_b partition is set in the manner 3, (Patch_a: Patch_b) may be further indicate which partition has a higher priority. For example, (Patch_a: Patch_b) indicates that Patch_a is prior to Patch_a, it indicates that a priority of Patcha is higher than that of Patchb, or Patch_a is a primary node, and Patch_b is a secondary node. For another example, if (Patch_b: Patch_a) indicates that Patch_b is prior to Patch_a, it indicates that a priority of Patchb is higher than that of Patcha, or Patch_b is a primary node, and Patch_a is a secondary node. If the terminal apparatus uses the foregoing manner 2 (a manner of replacing the inode2_a with the inode2_b), the updated first partition table may be represented as (System_a, Cust_a, Version_a, Product_a, Preload_a, Patch_b).

The foregoing uses an example in which the patch node is switched from originally corresponding to the patch_a partition to corresponding to the patch_b partition. It should be understood that in FIG. 9A, a principle of switching the Cust node from originally corresponding to the Cust_a partition to corresponding to the Cust_b partition is the same as that of switching the Cust node from originally corresponding to the Cust_a partition to corresponding to the Cust_b partition. Details are not described again.

S502: Read, based on a latest first partition table, data stored in the at least one partition.

The first partition table includes a data storage address (including a start address and an end address) of each partition, and the terminal apparatus may read data in each partition based on the storage address.

S503: The terminal apparatus runs an operating system based on the data.

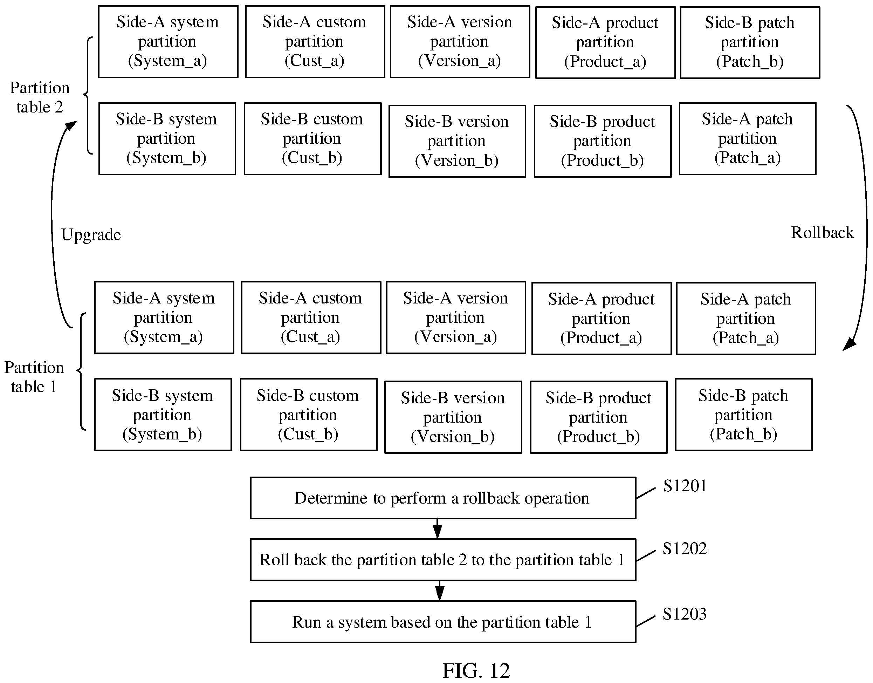

It may be understood that, when the terminal apparatus upgrades a partition in the first partition table, an upgrade failure may occur. If the upgrade fails, a rollback procedure may be performed. The rollback process may be understood as: an old version of a partition attempts to be upgraded to a new version, and when the upgrade fails, the old version is rolled back. "Rollback" may also be replaced with another name, for example, "crankback". For example, with reference to FIG. 12, when the system of the terminal apparatus is upgraded, the partition table 1 is updated to the partition table 2. When the terminal apparatus performs a rollback operation, the partition table 2 is rolled back to the partition table 1. As shown in FIG. 12, the rollback procedure includes the following steps.

S1201: Determine to perform a rollback operation.

For example, when at least one of the following conditions is met, the terminal apparatus determines that the rollback operation needs to be performed. For example, the condition includes that partition upgrade fails or a rollback instruction entered by a user is received.

S1202: Restore the partition table 2 to the partition table 1.

For example, that the terminal apparatus restores the partition table 2 to the partition table 1 may be understood as that the partition table 2 is deleted and replaced with the partition table 1. It may be understood that, FIG. 7 is used as an example, in comparison with the partition table 1 (the first partition table before the update), the partition table 2 (the first partition table after the update) updates only the patch_a partition to the patch_b partition, and other partitions are not updated. Therefore, when the partition table 2 is restored to the partition table 1, only the patch_b partition may be restored to the patch_a partition, and the other partitions do not need to be restored. In this way, during rollback of the terminal apparatus, other partitions may not need to be reloaded, and only the patch_a partition needs to be reloaded. In this manner, rollback efficiency can be improved.

S1203: Run the system based on the partition table 1.

In other words, the terminal apparatus reads, based on the partition table 1, stored data of each partition in the partition table 1, and runs the system based on the read data.

Optionally, before S1202, the method may further include a step: receiving a restart instruction of the terminal apparatus. In other words, when the terminal apparatus is restarted, the rollback process is executed.

The following uses the patch_a partition as an example to describe the rollback principle.

In a process of upgrading the patch_a partition, the terminal apparatus may automatically download and install an application of a new version. For example, before the upgrade, the terminal apparatus has an application of a version 1, and after the upgrade, the terminal apparatus installs the application of a version 2. In other words, when the patch_a partition is upgraded, the version of the application is upgraded accordingly. It may be understood that, when the terminal apparatus is rolled back, the terminal apparatus needs to be completely restored to a previous state, that is, the application of the version 2 needs to be restored to the application of the version 1. In an implementation, when the patch_a partition is upgraded, if a new version of the application is installed, a mark is set for the new version of the application, where the mark indicates that the new version of the application is installed when the patch_a partition is upgraded. When the terminal apparatus performs the rollback operation, the terminal apparatus scans the application in the terminal apparatus, and if it is found that the application has a mark, the terminal apparatus deletes the new version of the application. If an old version of the application is deleted in the upgrade process, the old version of the application may be re-downloaded to implement system restoration; or if an old version of the application is not deleted, the old version of the application is used.

In a case, before the patch_a partition is upgraded, information about the application of the version 1 is stored in the partition 1, for example, a system partition (for example, the application of the version 1 is provided by the terminal apparatus before delivery). After the patch_a partition is upgraded, the application of the version 2 is installed, but information about the application of the version 2 is stored in the partition 2, for example, a user partition (for example, an application downloaded after delivery is stored in the partition by default), and the application of the version 2 has a mark, where the mark is used to mark that the application is downloaded during the upgrade of the patch_a partition. In this way, the partition 1 stores the application of the version 1, and the partition 2 stores the application of the version 2 (with the mark). During rollback, the terminal apparatus may perform scanning based on a priority. For example, the terminal apparatus first scans the partition 2, and determines whether an application with a mark exists. If the application with a mark exists, the terminal apparatus deletes the application, and then uses the application of the version 1 in the partition 1. It is further assumed that after the patch_a partition is upgraded, the application of the version 2 is installed, and the information about the application of the version 2 is stored in the partition 2, but no mark is set for the application of the version 2. In other words, the partition 1 stores the application of the version 1, and the partition 2 stores the application of the version 2 (without the mark). In this case, the terminal apparatus still first scans the partition 2 based on a priority rule. It is clear that, when scanning the partition 2, the terminal apparatus does not find an application with a mark, and then the terminal apparatus scans the partition 1, and compares sizes of different versions of a same application in the partition 1 and the partition 2. If a version in a partition is larger in size, an application in the partition is deleted, and an application of an earlier version is used.

### Embodiment 2

In Embodiment 2, a head unit is used as an example for description. As described above, the head unit includes various domains, such as an IVI domain and an MCU domain. The terminal apparatus in the foregoing Embodiment 1 may be an IVI domain in a head unit. The IVI domain includes a side A and a side B. When the entire head unit is upgraded, the IVI domain may be upgraded in the manner (by updating the first partition table) in Embodiment 1. It should be understood that, in the head unit, the IVI domain needs to communicate with another domain (for example, the MCU domain). When the entire head unit is upgraded, the another domain connected to the IVI domain may not be upgraded with the upgrade of the IVI domain, or the another domain connected to the IVI domain may not support A/B upgrade. Embodiment 2 describes a processing process of a component in another domain when an entire head unit is upgraded.

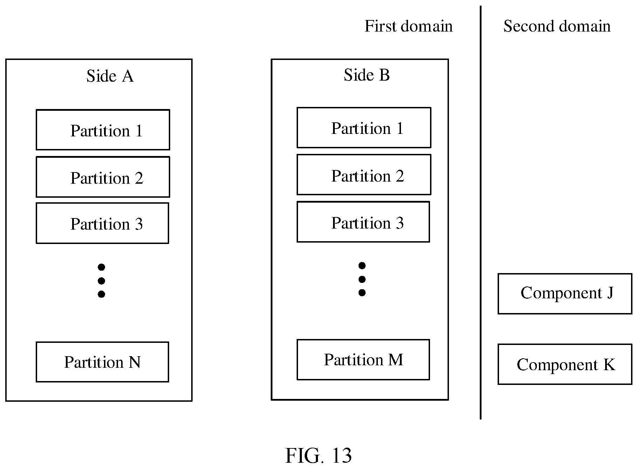

For example, FIG. 13 is a diagram of a head unit according to Embodiment 3. The head unit includes a first domain and a second domain. For example, the first domain and the second domain are two different domains in the head unit. For example, the first domain is one of an IVI, a VDC, a CDC, an ADC, an MDC, an MCU, and the like. The second domain is a domain that is different from the first domain and that is in the IVI, the VDC, the CDC, the ADC, the MDC, the MCU, and the like. The first domain includes a side A and a side B, and the second domain includes other components, for example, a component J and a combination K. The two components do not support A/B upgrade.

It should be noted that, when the entire head unit is upgraded, a general processing manner is that the first domain uses the conventional upgrade manner described above (for example, switching from the side A to the side B), and the second domain also needs to be reset (restored to factory settings). During the reset, a rollback package of a component in the second domain is deleted. After the first domain is upgraded, the rollback package of the component in the second domain is downloaded from a network side, and the component in the second domain is reloaded based on the rollback package. It is clear that, in this manner, when the entire head unit is upgraded, the rollback packet in the second domain needs to be downloaded from the network side, and this wastes transmission resources and has low efficiency. In Embodiment 2, the rollback package of the component in the second domain may be stored in a free storage area of the partition in the first domain. In this way, the rollback package of the component in the second domain does not need to be downloaded from the network side, thereby saving transmission resources and improving efficiency.

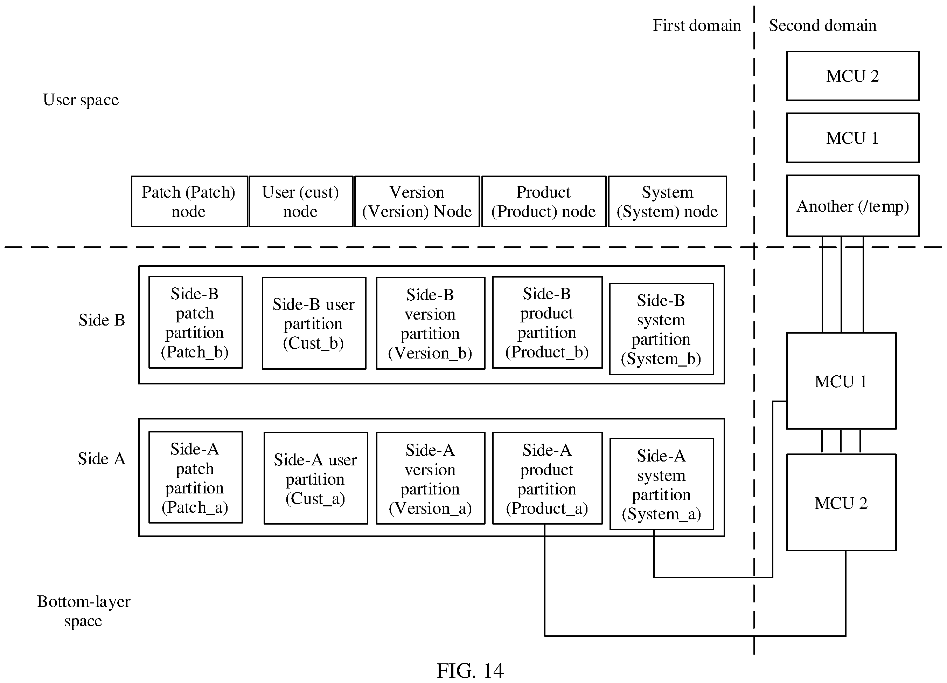

For example, as shown in FIG. 14, the head unit includes a user space and a bottom-layer space. The user space may also be referred to as an upper-layer space, and the bottom-layer space may also be referred to as a lower-layer space. The names are not limited in this application.

For the first domain, the user space includes a patch node, a system node, a product node, and the like. The bottom-layer space includes a side A and a side B. For example, the patch node corresponds to patch_a or patch_b. The system node corresponds to system_a or system_b. The product node corresponds to product_a or product_b. The patch_a is used as an example. Before a partition is upgraded, the patch node corresponds to the patch_a, the system node corresponds to the system_a, and the product node corresponds to the product_a. In this case, the terminal apparatus runs on the side A based on the patch node, the system node, and the product node. After the patch_a is upgraded to the patch_b, the patch node is switched from corresponding to the patch_a to corresponding to the patch_b, the system node corresponds to the system_a, and the product node corresponds to the product_a. In this case, the terminal apparatus runs a system based on the patch node, the system node, and the product node.

For the second domain, the bottom-layer space includes an MCU 1 and an MCU 2. The two components do not support A/B upgrade. In other words, in the conventional upgrade process of the entire head unit, the first domain uses the conventional upgrade manner described above (for example, switching from the side A to the side B), the MCU 1 and the MCU 2 in the second domain are restored to factory settings, and rollback packages of the MCU 1 and the MCU 2 are deleted. After the first domain is upgraded, the rollback packages are downloaded from a network side, and the MCU 1 and the MCU 2 are reloaded based on the rollback packages. In this embodiment of this application, an MCU 1' and an MCU 2' are created in the user space of the second domain. The MCU 1' corresponds to the MCU 1, and the MCU 2' corresponds to the MCU 2. The terminal apparatus creates another component, which is named /temp for ease of understanding. However, this name is not limited in this application. The another component may access a free storage space of the partitions in the side A and the side B at a bottom layer. For example, the rollback packages of the MCU 1 and the MCU 2 in the second domain are stored in the free storage space of the partitions of the side A and the side B, and are recorded in /temp. For example, /temp records that the rollback package of the MCU 1 is stored in a free area of the system_a, and the rollback package of the MCU 2 is stored in a free area of the product_a.

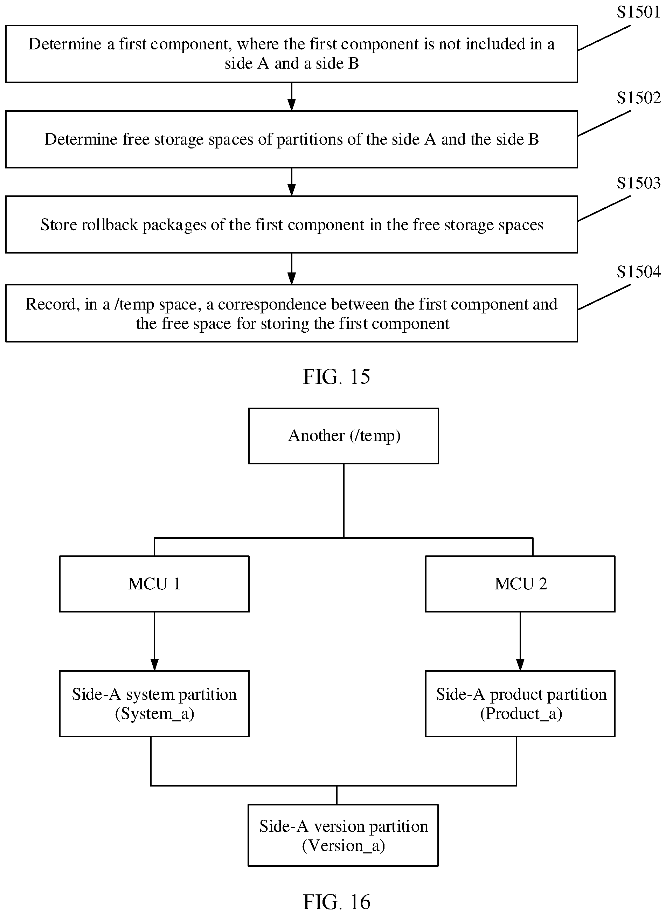

The following describes a storage process of the rollback package of the component in the second domain with reference to FIG. 15. As shown in FIG. 15, the procedure includes the following steps.

S1501: Determine a first component, where the first component is not included in the side A and the side B.

For example, the first component may be any component in the second domain in FIG. 14.

Optionally, before, after, or during S1501, a step of creating a node corresponding to the first component in the upper-layer space may be further performed. FIG. 14 is used as an example. If the first component includes the MCU 1 and the MCU 2, the MCU 1' and the MCU 2' may be created in the upper-layer space. The MCU 1' may access the MCU 1, and may be used to present the rollback package in the MCU 1 to a user. The MCU 2' may access the MCU 2, and may be used to present the rollback package in the MCU 2 to the user.

S1502: Determine the free storage spaces of the partitions of the side A and the side B.

As described above, each partition of the side A and the side B corresponds to one storage space, and the storage space is used to store information about a corresponding partition. For example, information about Patch_a is stored in a storage space corresponding to the Patch_a partition of the side A. Certainly, the storage space may not be fully occupied, and there is still a specific free space. Therefore, in S1502, the free storage area of the partitions of the side A and the side B may be determined.

S1503: Store rollback packages of the first component in the free storage spaces.

It is assumed that in S1502, a free storage space of the system_a partition and a free storage space of the product_a partition of the side A are determined. For example, the first component includes the MCU 1 and the MCU 2. For example, the rollback package of the MCU 1 may be stored in the free storage space of the system_a partition, and the rollback package of the MCU 2 may be stored in the free storage space of the product_a partition, as shown in FIG. 16.

S1504: Record, in a /temp space, a correspondence between the first component and the free space for storing the first component.

For example, FIG. 16 is used as an example. The following table is recorded in the /temp space.

| Component | Storage space |
|---|---|
| MCU 1 | system_a |
| MCU 2 | product_a |

After the rollback packages of the first component are stored, the entire head unit may be upgraded, for example, the upgrade is performed in the manner in Embodiment 1. The patch_a partition is used as an example. In a process of upgrading the partition, if other partitions such as the system_a and the product_a are not upgraded, that is, data is not updated in the free storage spaces of the system_a and the product_a, after the patch_a partition is upgraded, the rollback packages of the first component may be read from the free storage spaces of the system_a and the product_a, the first component is restored based on the rollback packages, and the rollback packages of the third component do not need to be downloaded from the network side.

In the foregoing example, the first component is stored in the free storage spaces of the system_a and the product_a, and the upgrade partition is the patch_a, that is, the upgrade partition is different from the storage partitions (the system_a and the product_a) of the rollback packages of the first component. In this case, the rollback packages of the first component may continue to be stored in the free storage spaces of the system_a and the product_a. There is a case: After the first component is stored in the free storage spaces of the system_a and the product_a, when the entire head unit is upgraded, either or both of the system_a and the product_a may need to be upgraded. In other words, after the first component is stored in the free storage area of the partition of the side A, the partition needs to be upgraded. In this case, a new storage space may be found to store the rollback packages of the first component. For example, with reference to 16, the rollback packages of the MCU 1 and the MCU 2 are originally stored in the free storage spaces of the system_a and the product_a. Because the system_a and the product_a need to be upgraded, the rollback packages of the MCU 1 and the MCU 2 are stored in the free storage space of another partition, for example, version_a.

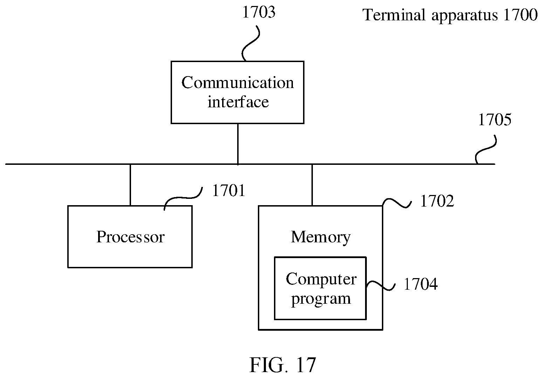

FIG. 17 is a diagram of a structure of a terminal apparatus 1700 according to an embodiment of this application. The terminal apparatus 1700 may be the foregoing terminal apparatus. As shown in FIG. 17, the terminal apparatus 1700 may include one or more processors 1701, one or more memories 1702, a communication interface 1703, and one or more computer programs 1704. The foregoing components may be connected through one or more communication buses 1705. The one or more computer programs 1704 are stored in the memory 1702 and are configured to be executed by the one or more processors 1701, and the one or more computer programs 1704 include instructions. For example, when the terminal apparatus 1700 is the foregoing terminal apparatus, the instructions may be used to perform related steps of the terminal apparatus in the foregoing corresponding embodiments, for example, steps of the terminal apparatus in the embodiment shown in FIG. 5. The communication interface 1703 is configured to implement communication between the terminal apparatus 1700 and another device. For example, the communication interface may be a transceiver.

In embodiments provided in this application, the methods provided in embodiments of this application are described from the perspective in which the terminal apparatus (for example, a mobile phone and a head unit) is used as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a specific function in the foregoing functions is performed by using the hardware structure, the software module, or the combination of the hardware structure and the software module depends on particular applications and design constraints of the technical solutions.

According to the context, the term "when" or "after" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

Reference to "an embodiment", "some embodiments", or the like described in the specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like. In a case in which no conflict occurs, the solutions in the foregoing embodiments may be combined for use.

It should be noted that a part of this patent application document includes content protected by copyright. Except for making copies of patent documents of the Patent Office or recorded content of patent documents, the copyright owner reserves the copyright.

## Claims

1. A system running method, applied to a terminal apparatus, wherein the terminal apparatus comprises N partitions, N is a positive integer, different partitions are storage areas used to store data of different functions in the terminal apparatus, and the method comprises:
obtaining a first partition table, wherein the first partition table comprises information about at least one of the N partitions, and the first partition table is updatable;
reading, based on a latest first partition table, data stored in the at least one partition; and
running an operating system of the terminal apparatus based on the data.

2. The method according to claim 1, wherein that the first partition table is updatable comprises:
partitions comprised in the first partition table before and after update are a combination of different partitions in the N partitions.

3. The method according to claim 1 or 2, wherein the terminal apparatus supports a first operating system and a second operating system; and the terminal apparatus runs in the first operating system based on a first set of partitions in the N partitions, and the terminal apparatus runs in the second operating system based on a second set of partitions in the N partitions, wherein the first set of partitions and the second set of partitions do not overlap each other.

4. The method according to claim 3, wherein the first operating system and the second operating system correspond to different operating systems or different versions of a same operating system.

5. The method according to claim 3 or 4, wherein the first partition table comprises information about at least one partition in the first set of partitions, and information about at least one partition in the second set of partitions.

6. The method according to any one of claims 1 to 5, wherein the first partition table comprises a data storage address of each partition, and the method further comprises:
downloading an upgrade package, wherein the upgrade package is used to upgrade a first partition in the N partitions;
storing the upgrade package, and recording a storage address of the upgrade package; and
updating a current storage address of the first partition in the first partition table based on the storage address.

7. The method according to claim 6, wherein the upgrade package comprises an installation package of a first application, and the method further comprises:
installing the first application based on the installation package, and setting a mark for the first application, wherein the mark is used to mark that the first application is an application installed during upgrade of the first partition, and the mark is used to delete the first application during rollback of the first partition by identifying the mark on the application.

8. The method according to claim 6, wherein the method further comprises:
storing a rollback package of a first component in a free space corresponding to a second partition in the first partition table, wherein the first component is not a component of any partition in the N partitions, the second partition is a partition other than the first partition in the first partition table, and the rollback package of the first component is used to perform rollback of the first component after the terminal apparatus is upgraded.

9. The method according to any one of claims 1 to 5, wherein the first partition table comprises a data storage address of each partition, and the method further comprises:
downloading an upgrade package, wherein the upgrade package is used to separately upgrade a third partition and a fourth partition in the N partitions, and a priority of the third partition is higher than that of the fourth partition; and
storing the upgrade package, and recording a storage address of the upgrade package; and updating a current storage address of the third partition in the first partition table based on the storage address.

10. The method according to claim 9, wherein that the priority of the third partition is higher than that of the fourth partition comprises at least one of the following:
the third partition is in an unused state, and the fourth partition is in a used state; or
a version of the third partition is lower than a version of the fourth partition; or
a use frequency of the third partition is lower than a use frequency of the fourth partition.

11. The method according to any one of claims 1 to 10, wherein the first partition table is stored by default before delivery of the terminal apparatus.

12. The method according to any one of claims 1 to 11, wherein the first partition table is stored in an application layer, a framework layer, a system layer, or a kernel layer in the terminal apparatus.

13. The method according to any one of claims 1 to 12, wherein the obtaining a first partition table comprises:
reading a second partition table, wherein the second partition table is a partition table stored by default before delivery of the terminal apparatus, the second partition table is not editable, and the second partition table comprises a current storage address of data of a fifth partition;
downloading an upgrade package, wherein the upgrade package is used to upgrade the fifth partition;
recording a third partition table, wherein the third partition table comprises a storage address of the upgrade package of the fifth partition; and
forming the first partition table by combining the third partition table and the second partition table, wherein the first partition table is obtained by superimposing the storage address of the upgrade package in the third partition table on an upper layer of the current storage address of the fifth partition in the second partition table.

14. The method according to claim 13, wherein superimposing the storage address of the upgrade package in the third partition table on the upper layer of the current storage address of the fifth partition in the second partition table comprises:
determining a file node corresponding to the fifth partition in the second partition table, wherein the file node can access the data stored at the current storage address of the fifth partition; and
establishing an association relationship between the file node and the storage address of the upgrade package in the third partition table, so that the upgrade package can be accessed via the file node.

15. The method according to any one of claims 1 to 14, wherein the method further comprises:
determining that a second application in the terminal apparatus needs to access data stored in a sixth partition in the first partition table;
determining whether the second application has access permission for the first partition table; and
when it is determined that the first application has the access permission for the first partition table, allowing the second application to access, based on the first partition table, the data stored in the sixth partition.

16. A terminal apparatus, comprising:
a processor, a memory, and one or more programs, wherein
the one or more programs are stored in the memory, the one or more programs comprise instructions, and when the instructions are executed by the processor, the terminal apparatus is enabled to perform the method according to any one of claims 1 to 15.

17. A computer-readable storage medium, wherein the computer-readable storage medium is used to store a computer program, and when the computer program is run on a computer, the computer is enabled to perform the method according to any one of claims 1 to 15.

18. A computer program product, comprising a computer program, wherein when the computer program is run on a computer, the computer is enabled to perform the method according to any one of claims 1 to 15.
